# EUROPEAN PATENT APPLICATION

(11) **EP 3 958 345 A1**
(43) Date of publication of application: **23.02.2022**
(21) Application number: 19925276.8
(22) Date of filing: 06.09.2019
(51) Int. Cl.: H01M 2/20, H01M 2/02, H01M 2/06, H01M 2/10, H01M 2/30, H01M 2/34

(54) **BATTERY MODULE**

(30) Priority: 19.04.2019 JP 2019080203
(71) Applicant: KABUSHIKI KAISHA TOSHIBA, Minato-ku Tokyo 105-0023 (JP)
(72) Inventor: OHNO, Motoharu, Tokyo 105-0023 (JP); ENOMOTO, Takashi, Tokyo 105-0023 (JP); IWAMURA, Naoki, Tokyo 105-0023 (JP)
(74) Representative: Hoffmann Eitle
(86) International application number: PCT/JP2019/035207
(87) International publication number: WO 2020/213188

(57) **Abstract**

According to one embodiment, a battery module includes a first battery, a second battery, a partition wall, and a bus bar. The second battery is arranged adjacent to the first battery in a stacking direction, and the partition wall partitions between the first battery and the second battery in the stacking direction. The bus bar includes a first contact part in contact with a first target terminal of the first battery, and a second contact part in contact with a second target terminal of the second battery. The bus bar electrically connects the first target terminal and the second target terminal to each other and is coupled to the partition wall between the first contact part and the second contact part.

## Description

### FIELD

Embodiments of the present invention relate generally to a battery module.

### BACKGROUND

In general, in a battery module, a plurality of batteries are stacked in a stacking direction, and two adjacently stacked batteries are electrically connected via a bus bar. Each of the batteries provided in the battery module includes an electrode group including a positive electrode and a negative electrode, a container in which the electrode group is accommodated, and a pair of electrode terminals attached to an outer surface of the container. In a first battery and a second battery, which are the two adjacently stacked batteries, a first target terminal which is one of the pair of electrode terminals of the first battery is electrically connected to a second target terminal which is one of the pair of electrode terminals of the second battery via the bus bar. The bus bar contacts the first target terminal of the first battery and contacts the second target terminal of the second battery.

In a battery module in which two adjacently stacked batteries are electrically connected via a bus bar as described above, dimensions, etc. may vary among the batteries. In this case, positions of the two target terminals connected by the bus bar may be shifted from each other in a direction intersecting the stacking direction. In the manufacture of the battery module as described above, it is required that the work efficiency of a work of connecting the two target terminals by the bus bar be ensured regardless of relative positions of the two target terminals connected by the bus bar. In addition, it is required that the bus bar be appropriately connected to the two target terminals regardless of the relative positions of the two target terminals connected by the bus bar, and that the reliability of the battery module be ensured.

### CITATION LIST

### PATENT LITERATURE

Patent Literature 1: International Publication No. 2016/204147

### SUMMARY

### TECHNICAL PROBLEM

A problem to be solved by the present invention is to provide a battery module in which the work efficiency of a work of connecting two target terminals by a bus bar is ensured and the reliability is ensured.

### SOLUTION TO PROBLEM

According to one embodiment, a battery module includes a first battery, a second battery, a partition wall, and a bus bar. The first battery includes a pair of first electrode terminals, and a second battery includes a pair of second electrode terminals. The second battery is arranged adjacent to the first battery in a stacking direction. The partition wall partitions between the first battery and the second battery in the stacking direction. The bus bar includes a first contact part and a second contact part, the first contact part being in contact with a first target terminal which is a corresponding one of the pair of first electrode terminals, the second contact part being in contact with a second target terminal which is a corresponding one of the pair of second electrode terminals. The bus bar electrically connects the first target terminal and the second target terminal to each other and is coupled to the partition wall between the first contact part and the second contact part.

According to one embodiment, a battery module includes a first battery, a second battery, and a bus bar. The first battery includes a pair of first electrode terminals, and a second battery includes a pair of second electrode terminals. The second battery is arranged adjacent to the first battery in a stacking direction. The bus bar includes a first contact part and a second contact part, the first contact part being in contact with a first target terminal which is a corresponding one of the pair of first electrode terminals, the second contact part being in contact with a second target terminal which is a corresponding one of the pair of second electrode terminals. The bus bar electrically connects the first target terminal and the second target terminal. The bus bar includes a first bar extension part extending from the first contact part to a side opposite to a side where the second battery is located in the stacking direction, and a second bar extension part extending from the second contact part to a side where the first battery is located in the stacking direction. The first bar extension part extends so as to be located on an outer side in a direction intersecting the stacking direction as the first bar extension part extends away from the second battery in the stacking direction. The second bar extension part extends so as to be located on an outer side in the direction intersecting the stacking direction as the second bar extension part extends toward the first battery in the stacking direction.

### BRIEF DESCRIPTION OF THE DRAWINGS

FIG. 1 is a perspective view schematically showing an example of a battery used in a battery module according to a first embodiment.
FIG. 2 is a perspective view schematically showing the battery of FIG. 1 disassembled for each member.
FIG. 3 is a schematic diagram showing a configuration of an electrode group of the battery of FIG. 1.
FIG. 4 is a schematic diagram showing an electrical connection configuration between an electrode group and one of a pair of electrode terminals in the battery of FIG. 1.
FIG. 5 is a perspective view schematically showing a battery assembly including the battery of FIG. 1.
FIG. 6 is a schematic view showing the battery assembly of FIG. 5 when viewed from one side in a lateral direction.
FIG. 7 is a perspective view schematically showing an example of the battery module according to the first embodiment.
FIG. 8 is a perspective view schematically showing the battery module of FIG. 7 with a frame omitted.
FIG. 9 is a perspective view schematically showing a configuration of one bus bar provided in the battery module of FIG. 7 and the vicinity thereof.
FIG. 10 is a schematic diagram showing a configuration of one bus bar provided in the battery module of FIG. 7 and the vicinity thereof in a cross section perpendicular or approximately perpendicular to a second intersecting direction.
FIG. 11 is a perspective view schematically showing a configuration of two adjacently arranged battery assemblies and the vicinity thereof in the battery module of FIG. 7.
FIG. 12 is a schematic diagram showing a configuration of the two adjacently arranged battery assemblies and the vicinity thereof in the battery module of FIG. 7 in a cross section perpendicular or approximately perpendicular to the second intersecting direction.
FIG. 13 is a schematic diagram showing a configuration of two adjacently arranged battery assemblies and the vicinity thereof in a battery module according to a modification of the first embodiment.
FIG. 14 is a perspective view schematically showing an example of a battery used in a battery module according to a second embodiment.
FIG. 15 is a perspective view schematically showing a configuration of two adjacently arranged batteries and the vicinity thereof in the battery module according to the second embodiment.
FIG. 16 is a schematic diagram showing an example in which a second target terminal is not shifted from the first target terminal in the second intersecting direction in the battery module of FIG. 15.
FIG. 17 is a schematic diagram showing an example in which the second target terminal is shifted from the first target terminal to an inner side in the second intersecting direction in the battery module of FIG. 15.
FIG. 18 is a schematic diagram showing an example in which the second target terminal is shifted from the first target terminal to an outer side in the second intersecting direction in the battery module of FIG. 15.

### DETAILED DESCRIPTION

Hereinafter, embodiments will be described with reference to the drawings. A battery module according to an embodiment includes a plurality of batteries.

### (First Embodiment)

Hereinafter, a battery module according to a first embodiment and a single battery used in the battery module will be described.

### [Battery]

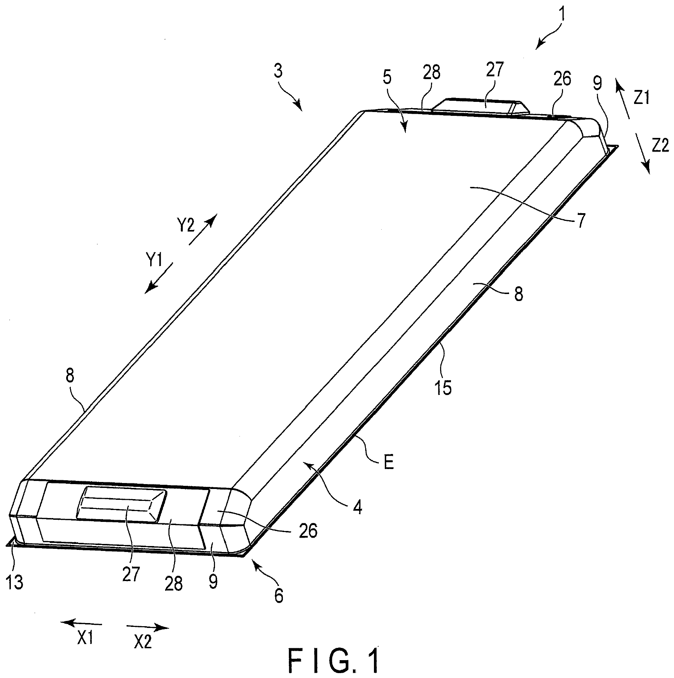

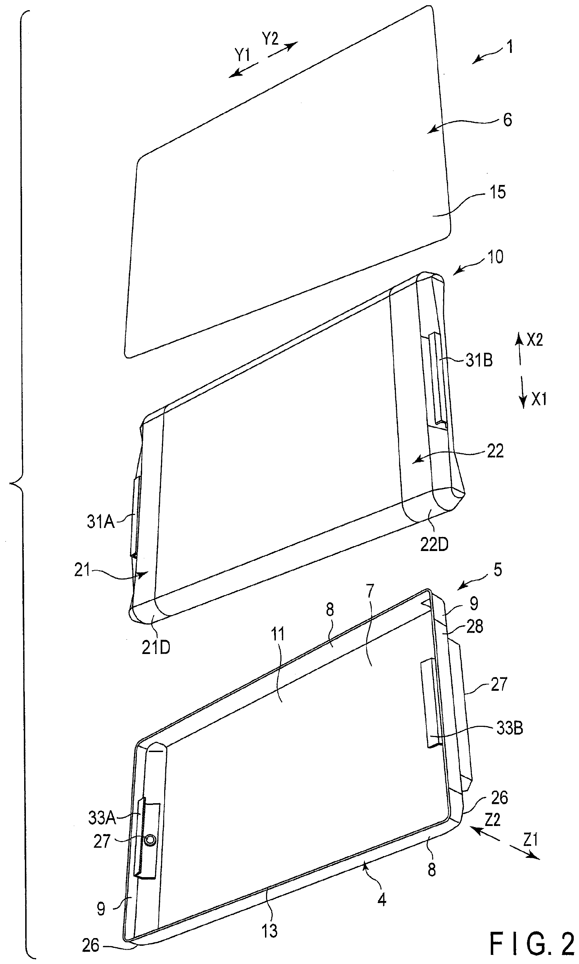

First, a single battery 1 will be described. FIG. 1 shows an example of a single battery 1 used in the battery module according to the first embodiment. FIG. 2 shows the battery 1 of FIG. 1 disassembled for each member. Each of the plurality of batteries provided in the battery module of the present embodiment has the same configuration as that of the battery 1 to be described below. The battery 1 is, for example, a secondary battery.

As shown in FIGS. 1 and 2, the battery 1 includes a container 3. The container 3 is made of a metal such as stainless steel. Examples of a metal forming the container 3, other than stainless steel, include aluminum, an aluminum alloy, iron, and plated steel. An inner cavity 11 is formed inside the container 3. In the battery 1 and the container 3, a depth direction (a direction indicated by arrows X1 and X2), a lateral direction (a direction indicated by arrows Y1 and Y2) intersecting (perpendicular or approximately perpendicular to) the depth direction, and a height direction (a direction indicated by arrows Z1 and Z2) intersecting (perpendicular or approximately perpendicular to) both the depth direction and the lateral direction, are defined.

The container 3 includes a first container member (cup member) 5 and a second container member (lid member) 6. The first container member 5 is formed in a container shape with a bottom. In the present embodiment, the first container member 5 has a bottom wall 7 and a peripheral wall 4, and is formed in an approximately rectangular parallelepiped shape with one surface opened. The bottom wall 7 is located on one side (arrow Z1 side) in the height direction with respect to the inner cavity 11. The peripheral wall 4 extends along a circumferential direction of the container 3, and an outer peripheral side of the inner cavity 11 is surrounded by the peripheral wall 4. The inner cavity 11 is adjacent to an inner peripheral side relative to the peripheral wall 4.

An internal space of the first container member 5 forms at least a part of the inner cavity 11 of the container 3, and opens toward a side opposite to a side where the bottom wall 7 is located. An opening edge of an opening of the internal space of the first container member 5 is formed at an end portion of the peripheral wall 4 on a side opposite to the bottom wall 7. Here, in the battery 1 and the container 3, a direction along the opening edge of the internal space of the first container member 5 coincides or approximately coincides with the circumferential direction. A side where the inner cavity 11 (internal space) is located with respect to the peripheral wall 4 is the inner peripheral side, and a side opposite to the inner peripheral side is an outer peripheral side.

The peripheral wall 4 includes two pairs of side walls 8 and 9. The pair of side walls 8 face each other across the inner cavity 11 in the depth direction. The pair of side walls 9 face each other across the inner cavity 11 in the lateral direction. Each of the side walls 8 extends continuously along the lateral direction between the side walls 9. Each of the side walls 9 extends continuously along the depth direction between the side walls 8.

The first container member 5 includes a flange 13. The flange 13 protrudes from the end portion of the peripheral wall 4 (side walls 8 and 9) on the side opposite to the bottom wall 7 toward the outer peripheral side. Thus, the flange 13 protrudes to the outer peripheral side with respect to the peripheral wall 4 and is formed away from the bottom wall 7 in the height direction. The flange 13 is formed over the entire circumference in the circumferential direction of the container 3, and protrudes to the outer peripheral side over the entire circumference in the circumferential direction of the container 3. The flange 13 extends from the opening edge of the internal space of the first container member 5 toward the outer peripheral side.

In the present embodiment, the second container member 6 is an approximately plate-shaped member, and is formed in an approximately rectangular shape, for example. The second container member 6 is attached to the flange 13 from the side opposite to the side where the bottom wall 7 is located in the height direction of the battery 1, and faces the flange 13 from the side opposite to the bottom wall 7. The opening of the internal space of the first container member 5 is closed by the second container member 6. The second container member 6 includes a top wall 15 facing the bottom wall 7 across the inner cavity 11 in the height direction. Thus, the bottom wall 7 of the first container member 5 faces the second container member 6 (top wall 15) across the inner cavity 11 in the height direction. The peripheral wall 4 and the flange 13 are provided between the bottom wall 7 and the second container member 6 in the height direction.

The second container member 6 protrudes to the outer peripheral side with respect to the peripheral wall 4 (side walls 8 and 9). The second container member 6 protrudes to the outer peripheral side over the entire circumference in the circumferential direction of the container 3. In the present embodiment, a thickness direction of the plate-like second container member 6 coincides or approximately coincides with the height direction of the battery 1 (container 3).

The second container member 6 is welded to the flange 13 in a state of being arranged on a side opposite to the bottom wall 7 with respect to the flange 13. In a welding portion, the flange 13 and the second container member 6 are airtightly welded. The welding portion of the flange 13 to the second container member 6 is formed on the outer peripheral side of the container 3 with respect to the opening edge of the internal space of the first container member 5. The welding portion between the flange 13 and the second container member 6 is formed continuously over the entire circumference in the circumferential direction. Thus, the inner cavity of the container 3 is sealed and closed off. In the welding portion, the flange 13 and the second container member 6 are welded by, for example, resistance seam welding. Resistance seam welding allows for costs to be suppressed, and obtaining of a high degree of airtightness between the flange 13 and the second container member 6 as compared with laser welding, etc.

In the present embodiment, a dimension in the height direction between the bottom wall 7 and the second container member 6 (top wall 15) is much smaller than a dimension in the depth direction between the pair of side walls 8 and a dimension in the lateral direction between the pair of side walls 9. Thus, in the inner cavity 11, a dimension in the height direction is much smaller than each of a dimension in the depth direction and a dimension in the lateral direction. A wall thickness of the container 3 is uniform or approximately uniform over the entire container 3 (container members 5 and 6). The wall thickness of the container 3 is thin and is formed to be, for example, from 0.02 mm to 0.3 mm. Therefore, in the battery 1, a dimension in the height direction is much smaller than each of a dimension in the depth direction and a dimension in the lateral direction. That is, the container 3 is formed in a flat shape in which a dimension in the height direction is smaller than each of a dimension in the depth direction and a dimension in the lateral direction. Further a protruding dimension of the flange 13 and the second container member 6 from the peripheral wall 4 to the outer peripheral side is about 2 mm to 5 mm. In the present embodiment, an outer peripheral end E of the container 3 (battery 1) is formed by a protruding end of each of the flange 13 and a protruding portion of the second container member 6.

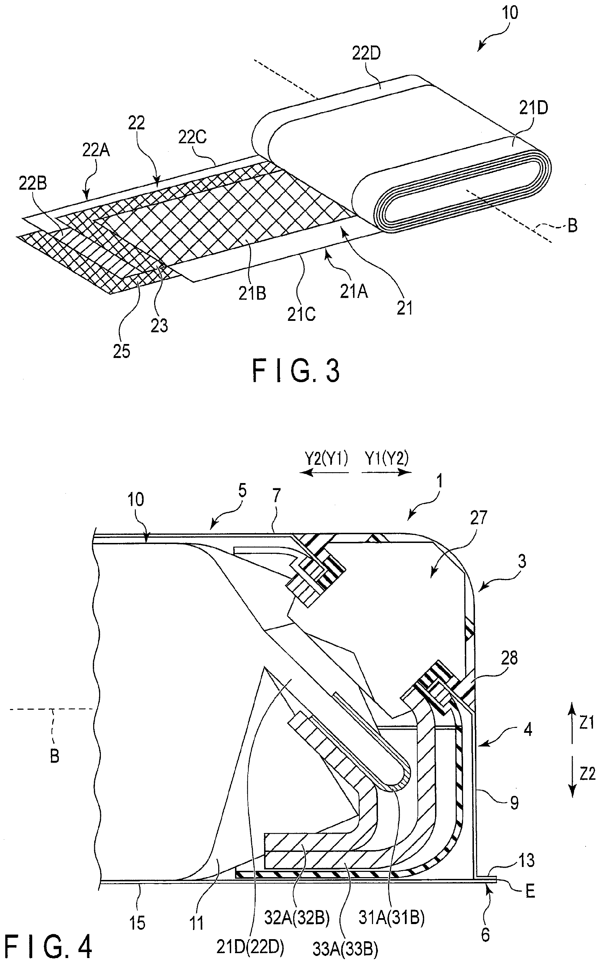

An electrode group 10 is accommodated in the inner cavity 11 of the container 3. FIG. 3 is a diagram for explaining a configuration of the electrode group 10. As shown in FIG. 3, the electrode group 10 is formed in a flat shape, for example, and includes a positive electrode 21, a negative electrode 22, and separators 23 and 25. The positive electrode 21 includes a positive electrode current collecting foil 21A serving as a positive electrode current collector, and a positive electrode active material-containing layer 21B supported on a surface of the positive electrode current collecting foil 21A. The positive electrode current collecting foil 21A is an aluminum foil or an aluminum alloy foil, etc., and has a thickness of about 10 µm to 20 µm. A slurry containing a positive electrode active material, a binder, and an electroconductive agent is applied to the positive electrode current collecting foil 21A. Examples of the positive electrode active material include, but are not limited to, oxides, sulfides, and polymers capable of occluding and releasing lithium. For the positive electrode active material, it is preferable to use a lithium-manganese composite oxide, a lithium-nickel composite oxide, a lithium-cobalt composite oxide, lithium iron phosphate, etc., since a high positive electrode electric potential can be obtained.

The negative electrode 22 includes a negative electrode current collecting foil 22A serving as a negative electrode current collector, and a negative electrode active material-containing layer 22B supported on a surface of the negative electrode current collecting foil 22A. The negative electrode current collecting foil 22A is an aluminum foil, an aluminum alloy foil, or a copper foil, etc., and has a thickness of about 10 µm to 20 µm. A slurry containing a negative electrode active material, a binder, and a conductive agent is applied to the negative electrode current collecting foil 22A. Examples of the negative electrode active material include, but are not particularly limited to, a metal oxide, a metal sulfide, a metal nitride, and a carbon material, which can occlude and release lithium ions. The negative electrode active material is preferably a substance which occludes and releases lithium ions at an electric potential of 0.4 V or more with respect to a metal lithium electric potential, i.e., a substance which occludes and releases lithium ions at an electric potential of 0.4 V (vs. Li⁺/Li) or more. The reaction of aluminum or an aluminum alloy with lithium is suppressed by using the negative electrode active material having a lithium ion occlusion-and-release electric potential as described above, which allows for usage of aluminum and an aluminum alloy for the negative electrode current collecting foil 22A and a structural member related to the negative electrode 22. Examples of a negative electrode active material having a lithium ion occlusion-and-release electric potential of 0.4 V (vs. Li⁺/Li) or more are a titanium oxide, a lithium titanium composite oxide such as a lithium titanate, a tungsten oxide, an amorphous tin oxide, a niobium titanium composite oxide, a tin silicon oxide, and a silicon oxide, and it is particularly preferable to use a lithium titanium composite oxide as the negative electrode active material. When a carbon material which occludes and releases lithium ions is used as the negative electrode active material, a copper foil may be used as the negative electrode current collecting foil 22A. The carbon material used as the negative electrode active material has a lithium ion occlusion-and-release electric potential of about 0 V (vs. Li⁺/Li).

The aluminum alloy used for the positive electrode current collecting foil 21A and the negative electrode current collecting foil 22A preferably includes one or more kinds of elements selected from Mg, Ti, Zn, Mn, Fe, Cu, and Si. The purity of the aluminum and the aluminum alloy may be set to 98% by weight or more, and is preferably 99.99% by weight or more. Pure aluminum having a purity of 100% can be used as a material for the positive electrode current collector and/or the negative electrode current collector. It is preferable to set the contained amount of transition metal such as nickel and chrome in the aluminum and the aluminum alloy to 100 ppm by weight or less (including 0 ppm by weight).

In the positive electrode current collecting foil 21A, a positive electrode current collecting tab 21D is formed of one long side edge 21C and its nearby portion. In the example of FIG. 3, the positive electrode current collecting tab 21D is formed over the entire length of the long side edge 21C. In the positive electrode current collecting tab 21D, the positive electrode active material-containing layer 21B is not supported on the surface of the positive electrode current collecting foil 21A. Therefore, the positive electrode current collecting foil 21A includes the positive electrode current collecting tab 21D as a portion on which the positive electrode active material-containing layer 21B is not supported. In addition, in the negative electrode current collecting foil 22A, a negative electrode current collecting tab 22D is formed of one long side edge 22C and its nearby portion. In the example of FIG. 3, the negative electrode current collecting tab 22D is formed over the entire length of the long side edge 22C. In the negative electrode current collecting tab 22D, the negative electrode active material-containing layer 22B is not supported on the surface of the negative electrode current collecting foil 22A. Therefore, the negative electrode current collecting foil 22A includes the negative electrode current collecting tab 22D as a portion on which the negative electrode active material-containing layer 22B is not supported.

Each of the separators 23 and 25 is made of an electrically insulating material, and electrically insulates between the positive electrode 21 and the negative electrode 22. Each of the separators 23 and 25 may be a separate sheet from the positive electrode 21 and the negative electrode 22, etc., or may be formed integrally with one of the positive electrode 21 and the negative electrode 22. The separators 23 and 25 may be made of an organic material, an inorganic material, or a mixture of an organic material and an inorganic material. Examples of organic materials forming the separators 23 and 25 include engineering plastics and super engineering plastics. Examples of engineering plastics include polyamide, polyacetal, polybutylene terephthalate, polyethylene terephthalate, syndiotactic polystyrene, polycarbonate, polyamideimide, polyvinyl alcohol, polyvinylidene fluoride, modified polyphenylene ether, etc. Examples of super engineering plastics include polyphenylene sulfide, polyether ether ketone, liquid crystal polymer, polyvinylidene fluoride, polytetrafluoroethylene (PTFE), polyether nitrile, polysulfone, polyacrylate, polyetherimide, thermoplastic polyimide, etc. Examples of inorganic materials forming the separators 23 and 25 include oxides (e.g., aluminum oxide, silicon dioxide, magnesium oxide, phosphorus oxide, calcium oxide, iron oxide, titanium oxide), nitrides (e.g., boron nitride, aluminum nitride, silicon nitride, barium nitride), etc.

In the electrode group 10, the positive electrode 21, the negative electrode 22, and the separators 23 and 25 are wound around a winding axis B into a flat shape, with the separators 23 and 25 being interposed between the positive electrode active material-containing layer 21B and the negative electrode active material-containing layer 22B, respectively. The positive electrode 21, the separator 23, the negative electrode 22, and the separator 25 are wound in a state of being stacked in this order, for example. In the electrode group 10, the positive electrode current collecting tab 21D of the positive electrode current collecting foil 21A protrudes to one side in a direction along the winding axis B with respect to the negative electrode 22 and the separators 23 and 25. The negative electrode current collecting tab 22D of the negative electrode current collecting foil 22A protrudes to a side opposite to a side where the positive electrode current collecting tab 21D protrudes in the direction along the winding axis B with respect to the positive electrode 21 and the separators 23 and 25.

The electrode group 10 is arranged in a state in which the winding axis B is parallel or approximately parallel to the lateral direction of the battery 1. Thus, in the inner cavity 11 of the container 3, the positive electrode current collecting tab 21D protrudes to one side in the lateral direction with respect to the negative electrode 22 and the separators 23 and 25. The negative electrode current collecting tab 22D protrudes to a side opposite to a side where the positive electrode current collecting tab 21D protrudes in the lateral direction with respect to the positive electrode 21 and the separators 23 and 25.

The electrode group 10 does not need to have a wound structure in which the positive electrode, negative electrode, and separators are wound. In an example, the electrode group 10 has a stack structure in which a plurality of positive electrodes and a plurality of negative electrodes are alternately stacked, and a separator is provided between the positive electrode and the negative electrode. Also in this case, in the electrode group 10, the positive electrode current collecting tab protrudes to one side in the lateral direction of the battery 1 (container 3) with respect to the negative electrode. In the electrode group, the negative electrode current collecting tab protrudes toward a side opposite to a side where the positive electrode current collecting tab protrudes in the lateral direction of the battery 1 with respect to the positive electrode.

In an example, an electrolytic solution (not shown) is impregnated into the electrode group 10 in the inner cavity 11. As an electrolytic solution, a nonaqueous electrolytic solution is used; for example, a nonaqueous electrolytic solution prepared by dissolving an electrolyte into an organic solvent is used. In this case, as the electrolyte to be dissolved into the organic solvent, lithium salts, such as lithium perchlorate (LiClO₄), lithium hexafluorophosphate (LiPF₆), lithium tetrafluoroborate (LiBF₄), lithium hexafluoride arsenate (LiAsF₆), lithium trifluoromethanesulfonate (LiCF₃SO₃), and lithium bistrifluoromethylsulfonylimide [LiN(CF₃SO₂)₂], and any mixtures thereof may be used. Examples of the organic solvent include: cyclic carbonate, such as propylene carbonate (PC), ethylene carbonate (EC), or vinylene carbonate; chain carbonate, such as diethyl carbonate (DEC), dimethyl carbonate (DMC), or methyl ethyl carbonate (MEC); cyclic ether, such as tetrahydrofuran (THF), 2-methyltetrahydrofuran (2MeTHF), and dioxolane (DOX); chain ether, such as dimethoxyethane (DME) and diethoxyethane (DEE); γ-butyrolactone (GBL), acetonitryl (AN), and sulfolane (SL). These organic solvents may be used either individually or as a mixed solvent.

In an example, a gel nonaqueous electrolyte which is a composite of a nonaqueous electrolytic solution and a polymeric material is used as a nonaqueous electrolyte instead of an electrolytic solution. In this case, the above-described electrolyte and organic solvent are used. Examples of the polymeric material include polyvinylidene fluoride (PVdF), polyacrylonitrile (PAN), and polyethylene oxide (PEO).

In an example, a solid electrolyte, such as a polymeric solid electrolyte and an inorganic solid electrolyte, is provided as a nonaqueous electrolyte instead of an electrolytic solution. In this case, the separators 23 and 25 may not be provided in the electrode group 10. In the electrode group 10, instead of the separators 23 and 25, the solid electrolyte is sandwiched between the positive electrode 21 and the negative electrode 22. Thus, in this example, the positive electrode 21 and the negative electrode 22 are electrically insulated from each other by the solid electrolyte. In an example, an aqueous electrolyte containing an aqueous solvent may be used as an electrolyte instead of a nonaqueous electrolyte.

As shown in FIGS. 1 and 2, a pair of electrode terminals 27 are attached to an outer surface of the container 3. One of the electrode terminals 27 serves as a positive electrode terminal of the battery 1, and the other of the electrode terminals 27 serves as a negative electrode terminal of the battery 1. Thus, the electrode terminals 27 have electrical polarities opposite to each other. In the embodiment of FIG. 1, etc., a pair of inclined surfaces 26 are formed on an outer surface of the first container member 5. Each of the inclined surfaces 26 is provided between a corresponding one of the side walls (first side walls) 9 and the bottom wall 7. Each of the pair of inclined surfaces 26 extends continuously along the depth direction between the side walls 8. Thus, each of the inclined surfaces 26 extends over the same or approximately the same range as that of the corresponding one of the side walls 9 in the circumferential direction of the battery 1 (container 3). Each of the inclined surfaces 26 is inclined with respect to the bottom wall 7 and the side wall 9. Each of the inclined surfaces 26 is inclined in a state that the inclined surface extends toward an inner side in the lateral direction as it approaches toward the bottom wall 7.

In the embodiment of FIG. 1, etc., each of the electrode terminals 27 is attached to a corresponding one of the inclined surfaces 26 in a state of being exposed to the outside. Therefore, each of the electrode terminals 27 is provided in a range in which a corresponding one of the side walls (first side walls) 9 extends in the circumferential direction of the container 3. In the example of FIGS. 1 and 2, each of the electrode terminals 27 is arranged at a central position or an approximately central position of a corresponding one of the inclined surfaces 26 in the depth direction. The electrode group 10 is arranged between the pair of electrode terminals 27 in the lateral direction. Each of the electrode terminals 27 is made of a conductive material, and, for example, is made of any one of aluminum, copper, stainless steel, etc.

A pair of insulating members 28 made of an electrically insulating material are provided on the outer surface of the first container member 5. Each of the insulating members 28 is arranged on an outer surface of a corresponding one of the side walls 9 and a corresponding one of the inclined surfaces 26. Each of the insulating members 28 is interposed between a corresponding one of the inclined surfaces 26 and a corresponding one of the electrode terminals 27, and electrically insulates the corresponding one of the electrode terminals 27 from the container 3 (first container member 5).

FIG. 4 shows an electrical connection configuration between the electrode group 10 and one of the pair of electrode terminals 27. As shown in FIG. 4, the positive electrode current collecting tab 21D of the electrode group 10 is bundled by welding such as ultrasonic welding. The bundle of the positive electrode current collecting tab 21D is electrically connected to a corresponding one (positive electrode terminal) of the electrode terminals 27 via one or more positive electrode leads including a positive electrode backup lead 31A, a positive electrode relay lead 32A, a positive electrode terminal lead 33A, etc. Connections between the positive electrode current collecting tab 21D and the positive electrode lead, between the positive electrode leads, and between the positive electrode lead and the positive electrode terminal are performed by welding such as ultrasonic welding. Here, the positive electrode lead is made of a conductive metal. The positive electrode terminal (corresponding one of 27), the positive electrode current collecting tab 21D, and the positive electrode lead are electrically insulated from the container 3 (container members 5 and 6) by an insulating member (not shown), etc.

Similarly, the negative electrode current collecting tab 22D of the electrode group 10 is bundled by welding such as ultrasonic welding. The bundle of the negative electrode current collecting tab 22D is electrically connected to a corresponding one (negative electrode terminal) of the electrode terminals 27 via one or more negative electrode leads including a negative electrode backup lead 31B, a negative electrode relay lead 32B, a negative electrode terminal lead 33B, etc. Connections between the negative electrode current collecting tab 22D and the negative electrode lead, between the negative electrode leads, and between the negative electrode lead and the negative electrode terminal are performed by welding such as ultrasonic welding. Here, the negative electrode lead is made of a conductive metal. The negative electrode terminal (corresponding one of 27), the negative electrode current collecting tab 22D, and the negative electrode lead are electrically insulated from the container 3 (container members 5 and 6) by an insulating member (not shown), etc.

### [Battery Assembly]

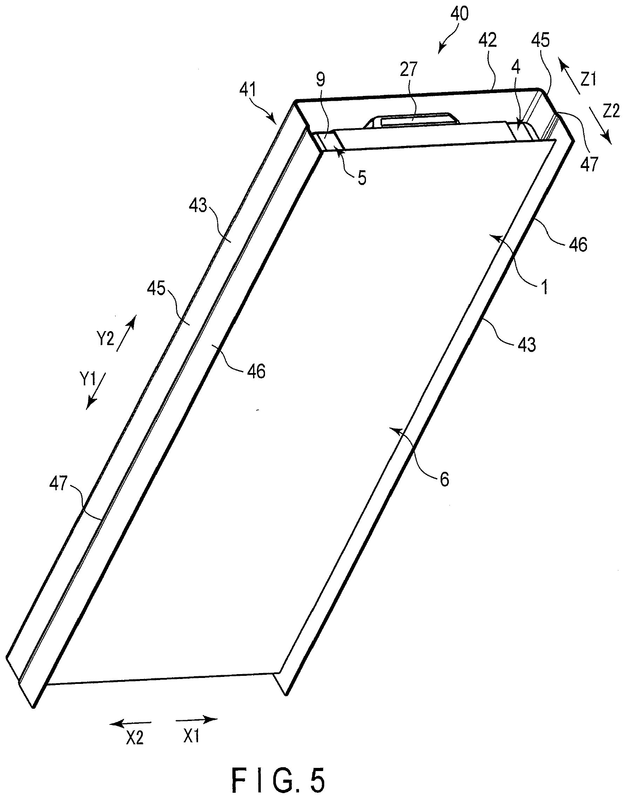

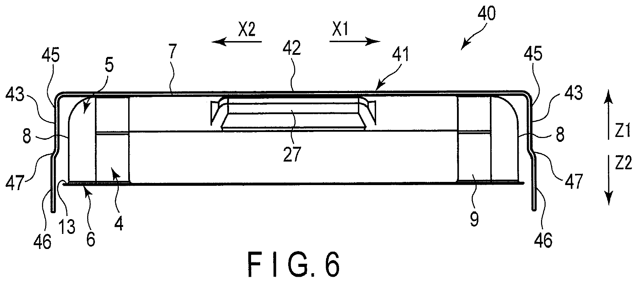

Next, a battery assembly will be described. The battery assembly includes, in addition to the battery 1 described above, a cover member 41 attached to the battery 1. FIGS. 5 and 6 show an example of a battery assembly 40. As shown in FIGS. 5 and 6, in the battery assembly 40, similarly to the battery 1, a depth direction (the direction indicated by arrows X1 and X2), a lateral direction (the direction indicated by arrows Y1 and Y2) intersecting (perpendicular or approximately perpendicular to) the depth direction, and a height direction (the direction indicated by arrows Z1 and Z2) intersecting (perpendicular or approximately perpendicular to) both the depth direction and the lateral direction, are defined. In the battery assembly 40, a dimension in the height direction is much smaller than each of a dimension in the depth direction and a dimension in the lateral direction. FIG. 6 shows the battery assembly 40 when viewed from one side in the lateral direction.

A cover member 41 is formed in an approximately plate-like shape and includes a base 42 and a pair of side plate parts 43. The base 42 faces the bottom wall 7 of the first container member 5 of the battery 1 and abuts on an outer surface of the bottom wall 7. In the battery assembly 40, the base 42 extends parallel or approximately parallel to the bottom wall 7, and extends parallel or approximately parallel to the depth direction and the lateral direction of the battery assembly 40. Thus, in the base 42, a thickness direction of the cover member 41 coincides or approximately coincides with the height direction of the battery assembly 40. In the present embodiment, the base 42 is in surface contact with the entire or approximately the entire outer surface of the bottom wall 7. However, the base 42 is not in contact with each of the electrode terminals 27. The base 42 protrudes to the outer peripheral side (outer side) with respect to the peripheral wall 4 (side walls 8 and 9). The base 42 protrudes to an outer side in the lateral direction with respect to the electrode terminals 27.

Each of the side plate parts 43 extends from a protruding end of the base 42 with respect to a corresponding one of the pair of side walls 8 or the vicinity thereof to a side where the flange 13 (second container member 6) is located. Each of the side plate parts 43 extends parallel or approximately parallel to the side wall (second side wall) 8, and extends parallel or approximately parallel to the lateral direction and the height direction of the battery assembly. Thus, in each of the side plate parts 43, the thickness direction of the cover member 41 coincides or approximately coincides with the depth direction of the battery assembly 40.

Each of the side plate parts 43 is provided over the entire or approximately the entire range in which a corresponding one of the side walls 8 extends in the circumferential direction of the battery 1. Therefore, in the present embodiment, the side plate part 43 is not provided in ranges in which the side walls (first side walls) 9 extend and ranges in which the electrode terminals 27 are located in the circumferential direction of the battery 1. Each of the side plate parts 43 faces a corresponding one of the side walls 8 from an outer side in the depth direction. Each of the side plate parts 43 faces an outer surface of a corresponding one of the side walls 8 with a gap between the side plate part 43 and the corresponding one of the side walls 8. With the above-described configuration, the side plate part 43 faces the peripheral wall 4 from the outer peripheral side in ranges away from both of the pair of electrode terminals 27 in the circumferential direction of the battery 1. In a range in which the side wall 8 extends in the circumferential direction of the battery 1, a gap is formed between each of the side walls (second side walls) 8 and a corresponding one of the side plate parts 43 along the lateral direction of the battery assembly 40.

In the present embodiment, each of the side plate parts 43 extends toward a side opposite to a side where the base 42 is located, beyond the flange 13 and the second container member 6. In addition, in the present embodiment, each of the side plate parts 43 extends through an outer side with respect to the protruding end (the outer peripheral end E of the container 3) of each of the flange 13 and the second container member 6. Each of the side plate parts 43 protrudes from the second container member 6 to the side opposite to the side where the bottom wall 7 is located in the height direction.

The cover member 41 may be entirely formed of an insulating layer made of an insulating resin, etc., or may have a structure in which an insulating layer and a metal layer are stacked. However, in the base 42 and the side plate parts 43, it is preferable that the entire or approximately the entire surface facing a side opposite to a side where the first container member 5 is located is formed of an insulating layer. Examples of the resin forming the insulating layer include polyethylene and polypropylene. Further, for example, when the cover member 41 is formed of an insulating layer and a metal layer, in the cover member 41, a layer thickness of the insulating layer is about 0.05 mm to 0.3 mm. A thickness of the cover member 41 is about 0.6 mm to 1.2 mm, and is minute.

Each of the side plate parts 43 includes extension parts 45 and 46 and a level difference 47 formed between the extension parts 45 and 46. The extension part (second cover extension part) 46 is arranged on the side opposite to the side where the base 42 is located with respect to the extension part (first cover extension part) 45. In each of the side plate parts 43, the extension part 45 is continuous with the base 42, and the extension part 46 protrudes from the second container member 6 to the side opposite to the side where the bottom wall 7 is located. The extension part 46 is arranged on the outer side in the depth direction with respect to the extension part 45 due to the level difference 47. That is, the level difference 47 is formed between the extension parts 45 and 46 in a state in which the extension part 46 is located on the outer side (outer peripheral side) with respect to the extension part 45.

### [Battery Module]

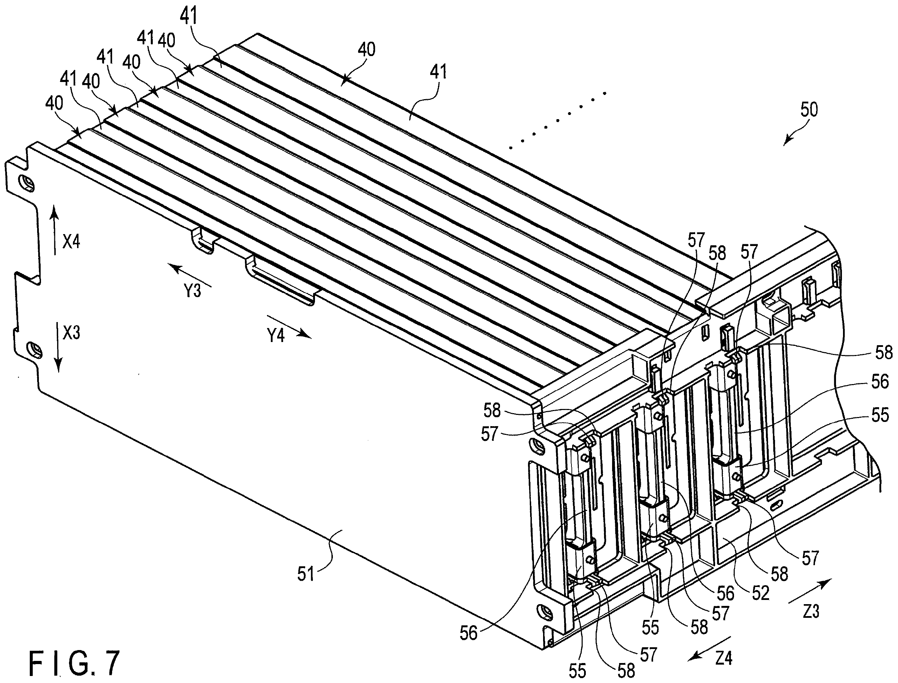

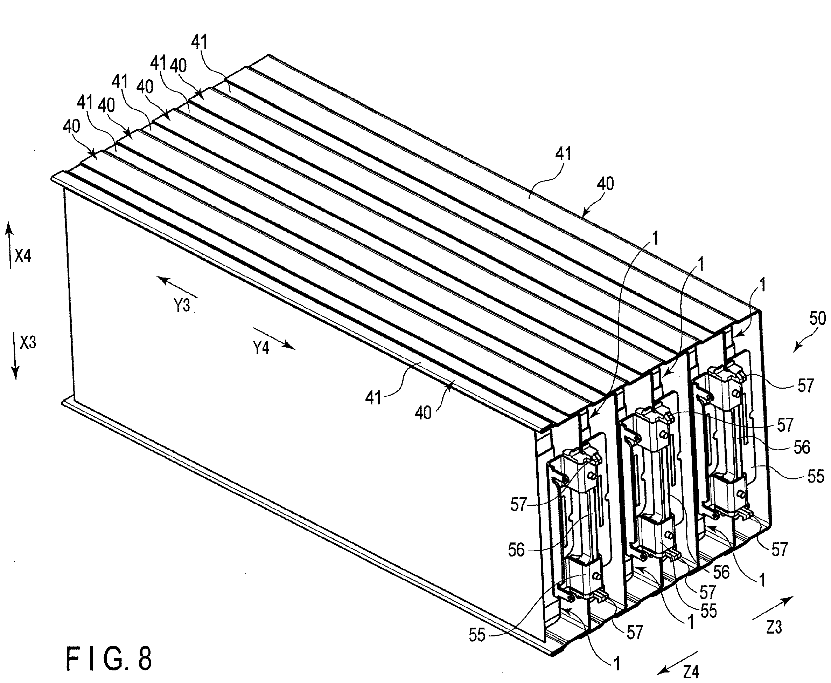

Next, a battery module including a plurality of battery assemblies such as the battery assembly 40 described above will be described. FIGS. 7 and 8 show an example of a battery module 50. As shown in FIGS. 7 and 8, in the battery module 50, a plurality of battery assemblies 40 are stacked (arrayed) in a stacking direction (the direction indicated by arrows Z3 and Z4). Thus, in the battery module 50, a plurality of batteries 1 are stacked in the stacking direction (array direction). Here, in the battery module 50, a first intersecting direction (the direction indicated by arrows Y3 and Y4) intersecting (perpendicular or approximately perpendicular to) the stacking direction, and a second intersecting direction (the direction indicated by arrows X3 and X4) intersecting (perpendicular or approximately perpendicular to) both the stacking direction and the first intersecting direction, are defined. A virtual central axis of the battery module 50 along the stacking direction is defined. According to the first intersecting direction and the second intersecting direction which are directions intersecting the stacking direction, a side away from the virtual central axis is defined as an outer side (outer peripheral side), and a side approaching the virtual central axis is defined as an inner side (inner peripheral side).

In the battery module 50, each of the plurality of battery assemblies 40 is arranged in a state in which the height direction thereof coincides or approximately coincides with the stacking direction (array direction). Each of the battery assemblies 40 is arranged in a state in which the lateral direction coincides or approximately coincides with the first intersecting direction and the depth direction coincides or approximately coincides with the second intersecting direction. Therefore, in the battery module 50, each of the plurality of batteries 1 is arranged in a state in which the height direction thereof is along the stacking direction. Each of the batteries 1 is arranged in a state in which the lateral direction is along the first intersecting direction and the depth direction is along the second intersecting direction.

In the battery module 50, a cavity in which a stacked body of the battery assemblies 40 is accommodated is defined by a frame including substrates 51 and 52, etc. That is, in the battery module 50, the stacked body of the battery assemblies 40 is arranged in the cavity surrounded by the frame including the substrates 51 and 52, etc. The substrate 51 faces the stacked body of the battery assemblies 40 from one side (arrow Z4 side) in the stacking direction. The substrate 52 faces the stacked body of the battery assemblies 40 from one side (arrow Y4 side) in the first intersecting direction. FIG. 7 shows only the substrates 51 and 52 in the frame surrounding the stacked body of the battery assemblies 40. In FIG. 8, the frame is omitted. Although not shown in FIG. 7, etc., in the battery module 50, a substrate similar to the substrate 51 faces the stacked body of the battery assemblies 40 from a side (arrow Z3 side) opposite to the substrate 51 in the stacking direction. Similarly, in the battery module 50, a substrate similar to the substrate 52 faces the stacked body of the battery assemblies 40 from a side (arrow Y3 side) opposite to the substrate 51 in the first intersecting direction.

The battery module 50 is provided with a plurality of bus bars 55 and the same number of engagement members 56 as that of bus bars 55. Each of the bus bars 55 is made of a conductive metal. Each of the bus bars 55 electrically connects two corresponding batteries 1 adjacent to each other in the stacking direction among the batteries 1. Each of the engagement members 56 is made of, for example, an electrically insulating resin, etc.

Here, two of the plurality of battery assemblies 40 that are arranged (stacked) adjacent to each other will be referred to as battery assemblies 40α and 40β. In the example of FIGS. 7 and 8, etc., the battery assembly (first battery assembly) 40α is any one of the battery assemblies 40, and the battery assembly (second battery assembly) 40β is one of the battery assemblies 40 that is adjacent to the battery assembly 40α on the arrow Z3 side. In the battery assembly 40α, the battery 1 is referred to as a battery (first battery) 1α, and the cover member 41 is referred to as a cover member (first cover member) 41α. In the battery assembly 40β, the battery 1 is referred to as a battery (second battery) 1β, and the cover member 41 is referred to as a cover member (second cover member) 41β. In the battery 1α, the pair of electrode terminals 27 are referred to as electrode terminals (first electrode terminals) 27α, and in the battery 1β, the pair of electrode terminals 27 are referred to as electrode terminals (second electrode terminals) 27β.

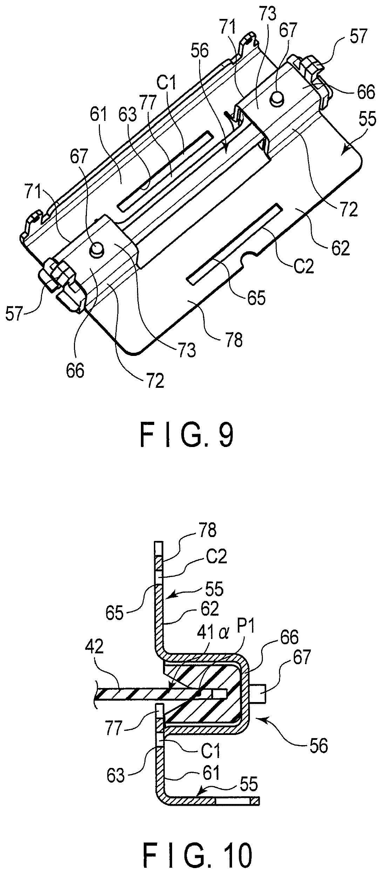

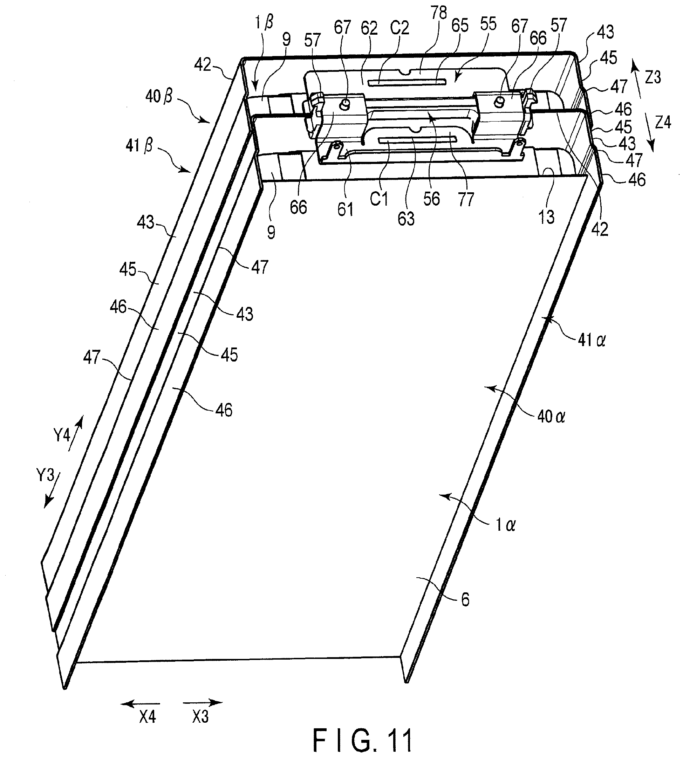

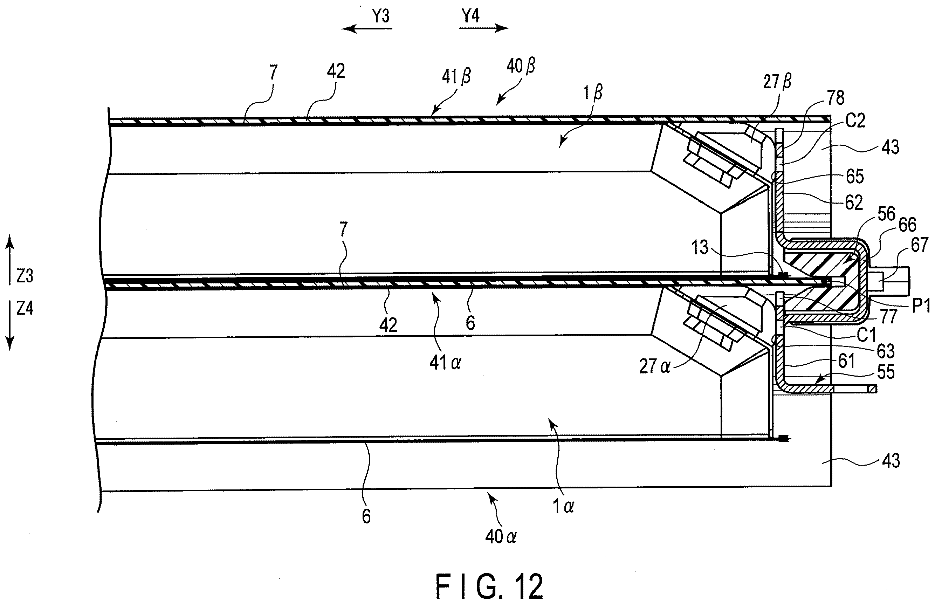

FIGS. 9 and 10 show a configuration of one of the bus bars 55 and the vicinity thereof. FIGS. 11 and 12 show configurations of the two battery assemblies 40α and 40β arranged adjacent to each other and the vicinity thereof. FIGS. 10 and 12 show cross sections perpendicular or approximately perpendicular to the second intersecting direction of the battery module 50, that is, cross sections perpendicular or approximately perpendicular to the depth direction of the battery assemblies 40α and 40β.

As shown in FIGS. 11 and 12, etc., in the battery module 50, the bottom wall 7 of the battery (first battery) 1α faces the second container member 6 of the battery (second battery) 1β with the base 42 of the cover member 41α interposed therebetween. Thus, the cover member 41α of the battery assembly 40α prevents the bottom wall 7 of the battery 1α from contacting the second container member 6 of the battery 1β. As a result, contact between the containers 3 of the batteries 1α and 1β is prevented, and electrical connection between the containers 3 of the batteries 1α and 1β is effectively prevented. With the above-described configuration, in the battery module 50, a partition wall that partitions between the batteries 1α and 1β in the stacking direction is formed by the base 42 of the cover member (first cover member) 41α. The base 42 of the cover member 41α protrudes to the outer side (outer peripheral side) with respect to the electrode terminal 27α of the battery 1α and the electrode terminal 27β of the battery 1β in the first intersecting direction.

The batteries 1α and 1β stacked adjacent to each other are electrically connected by one of the bus bars 55 in the following manner. In the battery module 50, a first target terminal which is a corresponding one of the pair of electrode terminals 27α of the battery (first battery) 1α is electrically connected to a second target terminal which is a corresponding one of the electrode terminals 27β of the battery (second battery) 1β via the bus bar 55. The first target terminal (corresponding one of 27α) of the battery 1α and the second target terminal (corresponding one of 27β) of the battery 1β, which are electrically connected by the bus bar 55, are located on the same side with respect to a central position of the battery module 50 in the first intersecting direction. That is, the first target terminal (corresponding one of 27α), the second target terminal (corresponding one of 27β), and the bus bar 55 are located on the same side with respect to the electrode groups 10 of the batteries 1α and 1β in the first intersecting direction.

In the example of FIGS. 11 and 12, the batteries 1α and 1β are electrically connected in series. Therefore, one of the first target terminal and the second target terminal connected by the bus bar 55 is a positive electrode terminal, and the other one is a negative electrode terminal. In another example, the batteries 1α and 1β may be electrically connected in parallel by using two bus bars 55. In this case, the positive electrode terminals of the batteries 1α and 1β are connected to each other by one of the bus bars 55 on one side with respect to the central position of the battery module 50 in the first intersecting direction. Then, on the other side with respect to the central position of the battery module 50 in the first intersecting direction, the negative electrode terminals of the batteries 1α and 1β are connected to each other by the other one of the bus bars 55.

As shown in FIGS. 9 to 12, etc., each of the bus bars 55 includes a first connector 61 and a second connector 62. In the bus bar 55 connecting the batteries 1α and 1β adjacent to each other, the first connector 61 is provided with a first contact part 63 which contacts the first target terminal (corresponding one of 27α) of the battery (first battery) 1α. The second connector 62 is provided with a second contact part 65 which contacts the second target terminal (corresponding one of 27β) of the battery (second battery) 1β. The first contact part 63 contacts the first target terminal (corresponding one of 27α) from the outer side in the first intersecting direction (the lateral direction of the battery 1α), and is connected to the first target terminal (corresponding one of 27α) by welding, etc. The second contact part 65 contacts the second target terminal (corresponding one of 27β) from the outer side in the first intersecting direction (the lateral direction of the battery 1β), and is connected to the second target terminal (corresponding one of 27β) by welding, etc.

Each of the bus bars 55 includes a pair of bar relay parts 66 that relay between the first connector 61 (first contact part 63) and the second connector 62 (second contact part 65). In the bus bar 55 connecting the batteries 1α and 1β adjacent to each other, each of the bar relay parts 66 relays between the connectors 61 and 62 beyond the base 42 of the cover member 41α. That is, each of the bar relay parts 66 extends along the stacking direction between the connectors 61 and 62 beyond the partition wall between the batteries 1α and 1β. In the bus bar 55 connecting the batteries 1α and 1β adjacent to each other, the pair of bar relay parts 66 are arranged apart from each other in the second intersecting direction (the depth direction of the batteries 1α and 1β). With the above-described configuration, the bus bar 55 connecting the batteries 1α and 1β adjacent to each other has an approximately O shape when viewed from the outer side in the first intersecting direction.

In the bus bar 55 connecting the batteries 1α and 1β, each of the bar relay parts 66 includes relay portions 71 to 73. The relay portion (first relay portion) 71 extends from the first connector 61 to the outer side in the first intersecting direction. The relay portion (second relay portion) 72 extends from the second connector 62 to the outer side in the first intersecting direction. The relay portion (third relay portion) 73 is continuous between the relay portions 71 and 72 along the stacking direction. With the configuration described above, in the bus bar 55 connecting the batteries 1α and 1β, the bar relay part 66 extends through a region on the outer side with respect to the base 42 of the cover member 41α in the first intersecting direction. The relay portion 73 of each of the bar relay parts 66 is arranged on the outer side (outer peripheral side) with respect to the protruding end of the base (partition wall) 42 in the first intersecting direction. Each of the bar relay parts 66 has an approximately U shape when viewed from the second intersecting direction.

In the bus bar 55 connecting the batteries 1α and 1β, a through hole C1 is formed in the first connector 61 and a through hole C2 is formed in the second connector 62. In the example of FIGS. 9 to 12, etc., each of the through holes C1 and C2 is formed in an elongated hole shape along the second intersecting direction (the depth direction of the batteries 1α and 1β). In the first connector 61, an edge of the through hole C1 and the vicinity thereof serve as the first contact part 63 which comes into contact with the first target terminal (corresponding one of 27α). In the second connector 62, an edge of the through hole C2 and the vicinity thereof serve as the second contact part 65 which comes into contact with the second target terminal (corresponding one of 27β) .

In the example of FIGS. 9 to 12, etc., the first connector 61 includes an extension portion 77 extending from the first contact part 63 to a side where the battery 1β (second connector 62) is located in the stacking direction. In the bus bar 55, the extension portion 77 is located between the bar relay parts 66 in the second intersecting direction. The second connector 62 includes an extension portion 78 extending from the second contact part 65 to a side opposite to a side where the battery 1α (first connector 61) is located in the stacking direction.

The bus bar 55 connecting the batteries 1α and 1β is coupled to the base 42 of the cover member 41α via a corresponding one of the engagement members 56. That is, the bus bar 55 is coupled to the partition wall between the batteries 1α and 1β. In the base 42, the bus bar 55 is coupled to a portion protruding to the outer side in the first intersecting direction with respect to the first target terminal (corresponding one of 27α) and the second target terminal (corresponding one of 27β).

A corresponding one of the engagement members 56 is engaged with a protruding portion of the base (partition wall) 42 of the cover member 41α with respect to the first target terminal (corresponding one of 27α) and the second target terminal (corresponding one of 27β). The corresponding one of the engagement members 56 is attached to the base 42 from the outer side in the first intersecting direction. Each of the engagement members 56 includes a pair of projections 67. In the engagement member 56 which engages with the base 42 of the cover member 41α, the projections 67 are arranged apart from each other in the second intersecting direction (the depth direction of the batteries 1α and 1β).

In the bus bar 55 connecting the batteries 1α and 1β, each of the bar relay parts 66 is engaged with a corresponding one of the pair of projections 67 of a corresponding one of the engagement members 56. Thus, the bus bar 55 is attached to the corresponding one of the engagement members 56 at the bar relay part 66. The bus bar 55 is coupled to the base (partition wall) 42 of the cover member 41α via a corresponding one of the engagement members 56 at the bar relay part 66. Therefore, the bus bar 55 is coupled at a portion between the first contact part 63 and the second contact part 65 to the protruding portion of the partition wall between the batteries 1α and 1β with respect to the first target terminal (corresponding one of 27α) and the second target terminal (corresponding one of 27β) .

In the example of FIGS. 7 to 12, etc., each of the engagement members 56 is provided with a pair of insertion pieces 57. In each of the engagement members 56, the pair of insertion pieces 57 are arranged apart from each other in the second intersecting direction. In the battery module 50, a plurality of recessed portions 58 are formed in each of the substrate 52 and a substrate (not shown) facing the substrate 52 across the stacked body of the battery assemblies 40. The total number of insertion pieces 57 in all of the engagement members 56 is the same as the total number of recessed portions 58 in the frame formed of the substrate 52, etc. In the example of FIG. 7, etc., the total number of insertion pieces 57 in all of the engagement members 56 is twice the number of engagement members 56 and twice the number of bus bars 55.

Each of the recessed portions 58 is recessed toward the inner side in the first intersecting direction. Each of the insertion pieces 57 is inserted into a corresponding one of the recessed portions 58 from the inner side in the second intersecting direction. A dimension of each of the insertion pieces 57 in the stacking direction is smaller than a dimension of a corresponding one of the recessed portions 58 in the stacking direction.

In the battery assemblies 40α and 40β adjacent to each other, the extension part (second cover extension part) 46 of each of the side plate parts 43 of the cover member (second cover member) 41β protrudes from the second container member 6 of the battery 1β to a side where the battery 1α is located. Each of the extension parts (second cover extension parts) 46 of the cover member (second cover member) 41β abuts on the extension part (first cover extension part) 45 of a corresponding one of the side plate parts 43 of the cover member (first cover member) 41α from the outer side (outer peripheral side) in the second intersecting direction. Thereby, movement of the battery assembly 40α in the second intersecting direction (the depth direction of the batteries 1α and 1β) relative to the battery assembly 40β is restricted.

Next, manufacturing of the battery module 50 will be described. When the battery module 50 is assembled, a plurality of battery assemblies 40 are stacked in a cavity surrounded by a frame including the substrates 51 and 52, etc. to form a stacked body of the battery assemblies 40. Thus, in the battery assemblies 40α and 40β stacked adjacent to each other, a partition wall between the batteries 1α and 1β is formed by the base 42 of the cover member (first cover member) 41α.

Each of the bus bars 55 electrically connects two corresponding batteries 1 adjacent to each other in the stacking direction. The batteries 1α and 1β adjacent to each other are electrically connected by one of the bus bars 55. At this time, first, one of the bus bars 55 is attached to a corresponding one of the engagement members 56. The bus bar 55 is attached to the engagement member 56 by engaging each of the bar relay parts 66 with a corresponding one of the pair of projections 67.

Then, each of the pair of insertion pieces 57 of the engagement member 56 is inserted into a corresponding one of the recessed portions 58 of the frame. Then, the engagement member 56 is attached to the base 42 of the cover member 41α in a state in which each of the insertion pieces 57 is inserted into a corresponding one of the recessed portions 58. At this time, the engagement member 56 engages with the protruding portion of the base (partition wall) 42 of the cover member 41α with respect to the first target terminal (corresponding one of 27α) and the second target terminal (corresponding one of 27β). Thus, the bus bar 55 is coupled to the base (partition wall) 42 of the cover member 41α via the corresponding one of the engagement members 56 at the bar relay part 66.

Here, a dimension of each of the insertion pieces 57 in the stacking direction is smaller than a dimension of a corresponding one of the recessed portions 58 in the stacking direction. Thus, before the bus bar 55 is coupled to the base 42 of the cover member 41α, each of the insertion pieces 57 of the engagement member 56 is movable inside a corresponding one of the recessed portions 58 along the stacking direction of the batteries 1. Thus, before the bus bar 55 is coupled to the base 42 of the cover member 41α, the bus bar 55 and the engagement member 56 are movable along the stacking direction of the batteries 1 with respect to the frame within a range in which the insertion piece 57 is movable. Therefore, in the present embodiment, positions of the bus bar 55 and the engagement member 56 in the stacking direction can be adjusted to a position where they are easily coupled to the base 42 of the cover member 41α. This improves workability in a work of engaging the engagement member 56 with the base 42 of the cover member 41α, that is, a work of coupling the bus bar 55 to the partition wall between the batteries 1α and 1β.

When the bus bar 55 is coupled to the base 42 of the cover member 41α, the first connector 61 of the bus bar 55 is brought into contact with the first target terminal (corresponding one of 27α) of the battery (first battery) 1α to form the first contact part 63. Similarly, the second connector 62 of the bus bar 55 is brought into contact with the second target terminal (corresponding one of 27β) of the battery (second battery) 1β to form the second contact part 65. Then, the first contact part 63 is welded to the first target terminal (corresponding one of 27α), and the second contact part 65 is welded to the second target terminal (corresponding one of 27β). Thus, the first target terminal (corresponding one of 27α) of the battery 1α and the second target terminal (corresponding one of 27β) of the battery 1β are electrically connected by the bus bar 55.

Here, in the battery module 50, dimensions, etc. may vary among the batteries 1 (battery assemblies 40). In this case, in the batteries 1α and 1β, positions of the two target terminals (the first target terminal and the second target terminal) connected by the bus bar 55 may be shifted from each other in a direction intersecting the stacking direction. That is, there is a possibility that the first target terminal (corresponding one of 27α) and the second target terminal (corresponding one of 27β) may be shifted from each other in the first intersecting direction, for example. In a certain battery module 50, the second target terminal (corresponding one of 27β) of the battery 1β may be shifted from the first target terminal (corresponding one of 27α) of the battery 1α to the inner side in the first intersecting direction. In another battery module 50, the second target terminal (corresponding one of 27β) of the battery 1β may be shifted from the first target terminal (corresponding one of 27α) of the battery 1α to the outer side in the first intersecting direction.

In the present embodiment, before the bus bar 55 is welded to the first target terminal (corresponding one of 27α) and the second target terminal (corresponding one of 27β), the bus bar 55 and the engagement member 56 are swingable (rotatable) together about a swinging axis (rotational axis) P1 relative to the battery assemblies 40α and 40β. The swinging axis P1 passes through an engagement portion between the base 42 of the cover member 41α and the engagement member 56, and extends along the second intersecting direction. Through swinging of the bus bar 55 and the engagement member 56 together about the swinging axis PI, the bus bar 55 can be easily adjusted to a state in which the first connector 61 is in contact with the first target terminal (corresponding one of 27α) and the second connector 62 is in contact with the second target terminal (corresponding one of 27β). That is, it is easy to form a state in which the first connector 61 contacts the first target terminal (corresponding one of 27α) and the second connector 62 contacts the second target terminal (corresponding one of 27β).

Since the state in which the first connector 61 contacts the first target terminal (corresponding one of 27α) and the second connector 62 contacts the second target terminal (corresponding one of 27β) is easily formed, the first connector 61 is easily welded to the first target terminal (corresponding one of 27α) and the second connector 62 is easily welded to the second target terminal (corresponding one of 27β). Therefore, in the present embodiment, even when positions of the two target terminals connected by the bus bar 55 are shifted from each other in a direction (e.g., the first intersecting direction) intersecting the stacking direction, the work efficiency of a work of connecting the two target terminals by the bus bar 55 is ensured. That is, regardless of relative positions of the two target terminals connected by the bus bar 55, the work efficiency of the work of connecting the two target terminals by the bus bar 55 is ensured.

In addition, since the first connector 61 is easily welded to the first target terminal (corresponding one of 27α), the bus bar 55 is appropriately connected to the first target terminal (corresponding one of 27α). Since the second connector 62 is easily welded to the second target terminal (corresponding one of 27β), the bus bar 55 is appropriately connected to the second target terminal (corresponding one of 27β). By appropriately connecting the bus bar 55 to the two target terminals, the reliability of the battery module 50 is ensured. That is, the bus bar 55 is appropriately connected to the two target terminals regardless of the relative positions of the two target terminals connected by the bus bar 55, and the reliability of the battery module 50 is ensured.

In the present embodiment, the extension part (second cover extension part) 46 of the cover member (second cover member) 41β abuts on the extension part (first cover extension part) 45 of the side plate part 43 of the cover member (first cover member) 41α from the outer side (outer peripheral side) in the second intersecting direction. Thereby, movement of the battery assembly 40α relative to the battery assembly 40β in the second intersecting direction (the depth direction of the batteries 1α and 1β) is restricted. Since the movement of the battery assembly 40α relative to the battery assembly 40β in the second intersecting direction is restricted, it is difficult to separate the battery assemblies 40α and 40β from each other in the battery module 50. This improves the strength of the battery module 50 against impact.

### (Modification of First Embodiment)

In a modification, the extension portions 77 and 78 are not provided in each of the bus bars 55. In this case, at the time of manufacturing the battery module 50, the extension portion 77 is cut after the first contact part 63 of the first connector 61 is welded to the first target terminal (corresponding one of 27α). Then, after the second contact part 65 of the second connector 62 is welded to the second target terminal (corresponding one of 27β), the extension portion 78 is cut.

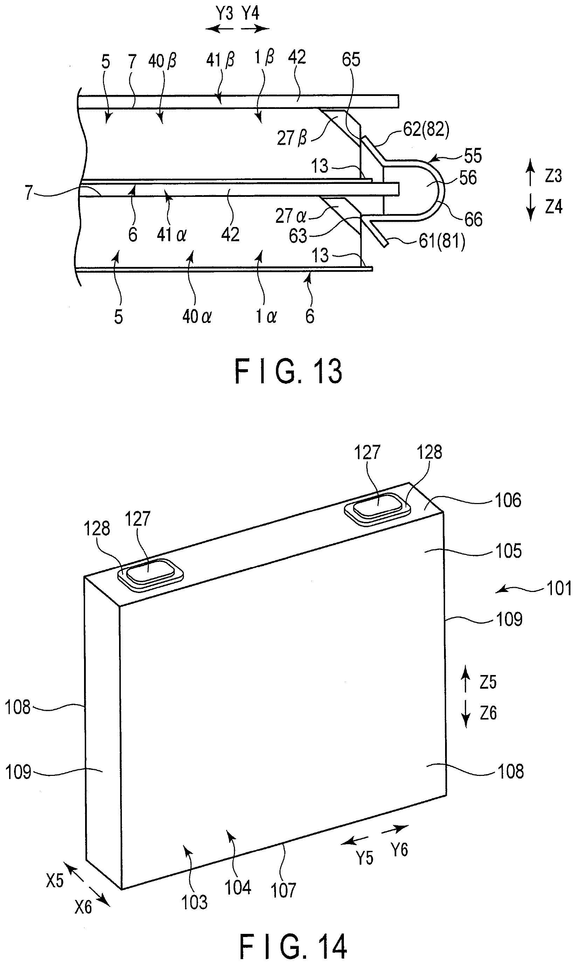

Also in a modification shown in FIG. 13, the bus bar 55 connecting the batteries 1α and 1β is provided with the first connector 61 and the second connector 62. However, in the present modification, the first contact part 63 of the first connector 61 that contacts the first target terminal (corresponding one of 27α) is formed in a linear shape along the second intersecting direction (the depth direction of the battery 1α). The second contact part 65 of the second connector 62 that contacts the second target terminal (corresponding one of 27β) is formed in a linear shape along the second intersecting direction (the depth direction of the battery 1β).

In the bus bar 55 connecting the batteries 1α and 1β, the first connector 61 is provided with an extension part (first bar extension part) 81, and the second connector 62 is provided with an extension part (second bar extension part) 82. The extension part 81 extends from the first contact part 63 to a side opposite to a side where the battery (second battery) 1β is located in the stacking direction. The extension part 82 extends from the second contact part 65 to a side where the battery (first battery) 1α is located in the stacking direction. In the present modification, the bar relay part 66 relays between the extension parts 81 and 82. The extension part 81 is continuous with the bar relay part 66 at an end on a side where the first contact part 63 is located. The extension part 82 is continuous with the bar relay part 66 at an end on a side opposite to a side where the second contact part 65 is located. Also in this modification, the bar relay part 66 extends beyond the base (partition wall) 42 of the cover member 41α between the connectors 61 and 62. The bus bar 55 is coupled to the partition wall between the batteries 1α and 1β at the bar relay part 66.

The extension part (first bar extension part) 81 extends so as to be located on an outer side in a direction intersecting the stacking direction as it extends away from the battery (second battery) 1β in the stacking direction. That is, the extension part 81 extends so as to be located on the outer side in the first intersecting direction as it is away from the bar relay part 66 in the stacking direction. The extension part (second bar extension part) 82 extends so as to be located on an outer side in the direction intersecting the stacking direction as it approaches toward the battery (first battery) 1α in the stacking direction. That is, the extension part 82 extends so as to be located on the outer side in the first intersecting direction as it extends toward the bar relay part 66 in the stacking direction.

With the above-described configuration, in the present modification, a state in which the first connector 61 is in contact with the first target terminal (corresponding one of 27α) at the first contact part 63 and the second connector 62 is in contact with the second target terminal (corresponding one of 27β) at the second contact part 65 is more easily formed. Thus, the work efficiency of the work of connecting the two target terminals by the bus bar 55 is improved. In addition, the bus bar 55 is more appropriately connected to the two target terminals, and the reliability of the battery module 50 is improved.

In the above-described embodiment, etc., the partition wall between the batteries 1α and 1β is formed by the base 42 of the cover member 41α, but it is not limited thereto. In a modification, instead of the cover member 41, a partition plate is provided between the batteries 1α and 1β, and the partition plate forms a partition wall between the batteries 1α and 1β. Also in this modification, at least a part of the partition plate is made of an electrically insulating material. The partition wall (partition plate) prevents the containers 3 of the batteries 1α and 1β from coming into contact with each other, and effectively prevents the containers 3 of the batteries 1α and 1β from being electrically connected to each other.

Also in this modification, the partition wall between the batteries 1α and 1β protrudes to the outer side with respect to the electrode terminals 27α and 27β in the direction (first intersecting direction) intersecting the stacking direction. The bus bar 55 that electrically connects the batteries 1α and 1β is coupled to the protruding portion of the partition wall with respect to the first target terminal (corresponding one of 27α) and the second target terminal (corresponding one of 27β) between the first contact part 63 and the second contact part 65.

In a modification, the second container member (lid member) 6 is not formed in a plate shape, but is formed in an approximately rectangular parallelepiped shape with one surface opened in the same manner as the first container member 5. In this case, the second container member 6 includes, in addition to the top wall 15, a peripheral wall and a flange in the same manner as the first container member 5. Then, the flange 13 of the first container member 5 and the flange of the second container member 6 are airtightly welded to each other. However, even in this case, the battery 1 (container 3) is formed in a flat shape in which a dimension in the height direction is smaller than each of a dimension in the depth direction and a dimension in the lateral direction. In the inner cavity 11, a dimension in the height direction between the bottom wall 7 and the second container member 6 (top wall 15) is smaller than each of a dimension in the depth direction between the pair of side walls (second side walls) 8 and a dimension in the lateral direction between the pair of side walls (first side walls) 9.

### (Second Embodiment)

Next, a battery module according to a second embodiment and a single battery used in the battery module will be described.

### [Battery]

First, a single battery 101 will be described. FIG. 14 shows an example of the single battery 101 used in the battery module according to the second embodiment. The battery 101 is, for example, a secondary battery.

As shown in FIG. 14, the battery 101 includes an exterior container (container) 103. The exterior container 103 is made of a metal such as aluminum, an aluminum alloy, iron or stainless steel. An inner cavity (not shown) is formed inside the exterior container 103. In the battery 101 and the exterior container 103, a depth direction (the direction indicated by arrows X5 and X6), a lateral direction (the direction indicated by arrows Y5 and Y6) intersecting (perpendicular or approximately perpendicular to) the depth direction, and a height direction (the direction indicated by arrows Z5 and Z6) intersecting (perpendicular or approximately perpendicular to) both the depth direction and the lateral direction, are defined.

The exterior container 103 includes a container body 105 and a lid member 106. In the present embodiment, the container body 105 has a bottom wall 107 and a peripheral wall 104, and is formed in an approximately rectangular parallelepiped shape with one surface opened. The bottom wall 107 is located on one side (arrow Z6 side) in the height direction with respect to the inner cavity. The peripheral wall 104 extends along a circumferential direction of the exterior container 103, and an outer peripheral side of the inner cavity is surrounded by the peripheral wall 104. In addition, the inner cavity opens toward a side (arrow Z5 side) opposite to a side where the bottom wall 107 is located in the height direction.

The peripheral wall 104 includes two pairs of side walls 108 and 109. A pair of side walls 108 face each other across the inner cavity in the depth direction. A pair of side walls 109 face each other across the inner cavity in the lateral direction. Each of the side walls 108 extends continuously between the side walls 109 along the lateral direction. Each of the side walls 109 extends continuously between the side walls 108 along the lateral direction.

The lid member 106 is attached to the container body 105 at the opening of the inner cavity. The lid member 106 closes the opening of the inner cavity. In the present embodiment, the lid member 106 is provided in a state in which a thickness direction of the lid member 106 coincides or approximately coincides with the height direction of the battery 101.

In the present embodiment, a dimension in the depth direction between the pair of side walls 108 is much smaller than each of a dimension in the height direction between the bottom wall 107 and the lid member 106 and a dimension in the lateral direction between the pair of side walls 109. Thus, in the inner cavity, a dimension in the depth direction is much smaller than each of a dimension in the lateral direction and a dimension in the height direction. A wall thickness of the exterior container 103 is uniform or approximately uniform over the entire exterior container 103. Therefore, in the battery 101, a dimension in the depth direction is much smaller than each of a dimension in the lateral direction and a dimension in the height direction.

An electrode group is accommodated in the inner cavity of the exterior container 103. The electrode group has, for example, the same configuration as that of the electrode group 10 of the first embodiment, and is formed of the positive electrode 21, the negative electrode 22, the separators 23 and 25, etc. In the inner cavity, the electrode group is impregnated with an electrolyte such as an electrolytic solution. As the electrolytic solution, the same electrolytic solution as any one of the electrolytic solutions described in the first embodiment is used. Instead of the electrolytic solution, any one of the gel electrolyte and the solid electrolyte described in the first embodiment may be used as the electrolyte.

In the present embodiment, a pair of electrode terminals 127 are attached to an outer surface of the lid member 106, that is, a surface of the lid member 106 facing away from the bottom wall 107. One of the electrode terminals 127 serves as a positive electrode terminal of the battery 101, and the other one of the electrode terminals 127 serves as a negative electrode terminal of the battery 101. Each of the electrode terminals 127 is attached to the outer surface of the lid member 106 in a state of being exposed to the outside. In the present embodiment, the electrode terminals 127 are arranged apart from each other in the lateral direction. A central position of the battery 101 in the lateral direction is located between the electrode terminals 127. Each of the electrode terminals 127 is made of a conductive material, and, for example, is made of any one of aluminum, copper, stainless steel, etc.

A pair of insulating members 128 made of an electrically insulating material are provided on the outer surface of the lid member 106. Each of the insulating members 128 is interposed between the outer surface of the lid member 106 and a corresponding one of the electrode terminals 127, and electrically insulates the corresponding one of the electrode terminals 127 from the exterior container 103. Further, the insulating members 128 are arranged on sides opposite to each other across the central position of the battery 101 in the lateral direction.

Also in this embodiment, a positive electrode current collecting tab of the electrode group is bundled by welding such as ultrasonic welding. A bundle of the positive electrode current collecting tab is electrically connected to a corresponding one (positive electrode terminal) of the electrode terminals 127 via one or more positive electrode leads. At this time, connections between the positive electrode current collecting tab and the positive electrode lead, between the positive electrode leads, and between the positive electrode lead and the positive electrode terminal are performed by welding such as ultrasonic welding. Here, the positive electrode lead is made of a conductive metal. The positive electrode current collecting tab and the positive electrode lead are electrically insulated from the exterior container 103 by an insulating member (not shown), etc.

Similarly, a negative electrode current collecting tab of the electrode group is bundled by welding such as ultrasonic welding. A bundle of the negative electrode current collecting tab is electrically connected to a corresponding one (negative electrode terminal) of the electrode terminals 127 via one or more negative electrode leads. At this time, connections between the negative electrode current collecting tab and the negative electrode lead, between the negative electrode leads, and between the negative electrode lead and the negative electrode terminal are performed by welding such as ultrasonic welding. Here, the negative electrode lead is made of a conductive metal. The negative electrode current collecting tab and the negative electrode lead are electrically insulated from the exterior container 103 by an insulating member (not shown), etc.

### [Battery Module]

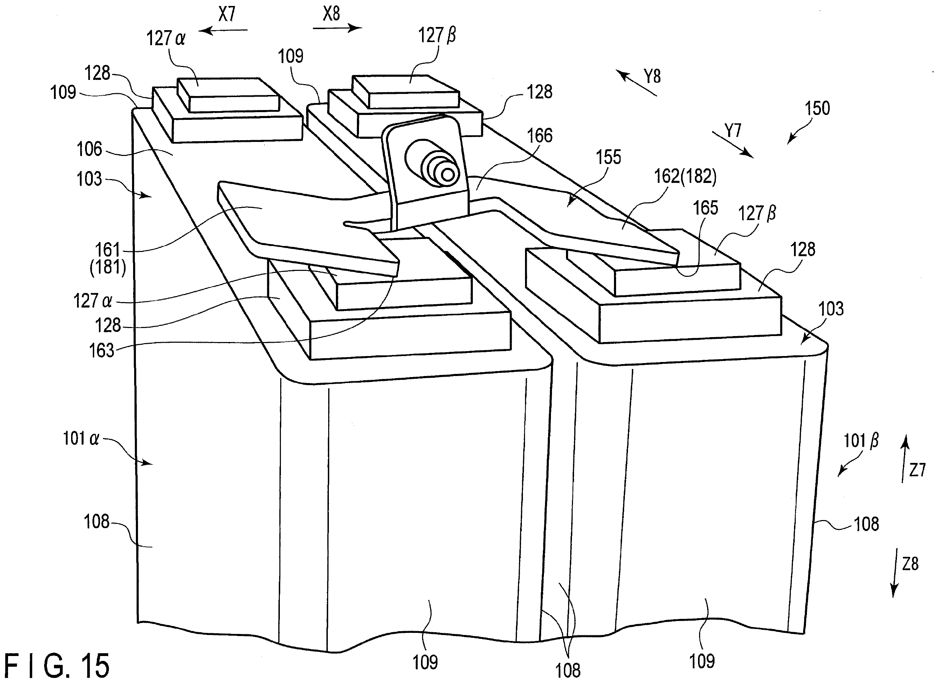

Next, a battery module including a plurality of batteries such as the above-described battery 101 will be described. FIG. 15 shows an example of a battery module 150. As shown in FIG. 15, in the battery module 150, a plurality of batteries 101 are stacked (arrayed) in a stacking direction (the direction indicated by arrows X7 and X8). Here, in the battery module 150, a first intersecting direction (the direction indicated by arrows Y7 and Y8) intersecting (perpendicular or approximately perpendicular to) the stacking direction (array direction), and a second intersecting direction (the direction indicated by arrows Z7 and Z8) intersecting (perpendicular or approximately perpendicular to) both the stacking direction and the first intersecting direction, are defined. In addition, a virtual central axis of the battery module 150 along the stacking direction is defined. According to the first intersecting direction and the second intersecting direction which are directions intersecting the stacking direction, a side away from the virtual central axis is defined as an outer side (outer peripheral side), and a side approaching the virtual central axis is defined as an inner side (inner peripheral side).

In the battery module 150, each of the plurality of batteries 101 is arranged in a state in which the depth direction coincides or approximately coincides with the stacking direction (array direction). Each of the batteries 101 is arranged in a state in which the lateral direction coincides or approximately coincides with the first intersecting direction and the height direction coincides or approximately coincides with the second intersecting direction. Therefore, in the battery module 150, each of the plurality of batteries 101 is arranged in a state in which the depth direction is along the stacking direction. Each of the batteries 101 is arranged in a state in which the lateral direction is along the first intersecting direction and the height direction is along the second intersecting direction.

In addition, the battery module 150 of the present embodiment is provided with one or more bus bars 155. Each of the bus bars 155 is made of a conductive metal. Each of the bus bars 155 electrically connects two corresponding batteries 101 adjacent to each other in the stacking direction among the batteries 101.

Here, two batteries arranged (stacked) adjacent to each other among the plurality of batteries 101 are referred to as batteries 101α and 101β. In the example of FIG. 15, etc., the battery (first battery) 101α is any one of the batteries 101, and the battery (second battery) 101β is any one of the batteries 101 adjacent to the battery 101α on the arrow X8 side. In the battery 101α, the pair of electrode terminals 127 are referred to as electrode terminals (first electrode terminals) 127α, and in the battery 101β, the pair of electrode terminals 127 are referred to as electrode terminals (second electrode terminals) 127β. FIG. 15 shows a configuration of the two batteries 101α and 101β arranged adjacent to each other and the vicinity thereof in the battery module 150.

As shown in FIG. 15, etc., in the battery module 150, one of the side walls 108 of the battery (first battery) 101α faces one of the side walls 108 of the battery (second battery) 101β. The outer surface of the lid member 106 of the battery 101α faces the same side as a side where the outer surface of the lid member 106 of the battery 101β faces in the second intersecting direction. Therefore, the lid member 106 and the electrode terminals 127α of the battery 101α are located on a side where the lid member 106 and the electrode terminals 127β of the battery 101β are located with respect to a central position of the battery module 150 in the second intersecting direction (the height direction of the batteries 101α and 101β).

The batteries 101α and 101β stacked adjacent to each other are electrically connected by one of the bus bars 155 in the following manner. In the battery module 150, a first target terminal which is a corresponding one of the pair of electrode terminals 127α of the battery (first battery) 101α is electrically connected to a second target terminal which is a corresponding one of the electrode terminals 127β of the battery (second battery) 101β via the bus bar 155. The first target terminal (corresponding one of 127α) of the battery 101α and the second target terminal (corresponding one of 127β) of the battery 101β electrically connected by the bus bar 155 are located on the same side with respect to the central position of the battery module 150 in the first intersecting direction (the lateral direction of the batteries 101α and 101β). In the example of FIG. 15, etc., the batteries 101α and 101β are electrically connected in series. However, in another example, the batteries 101α and 101β may be electrically connected in parallel using two bus bars 155.

As shown in FIG. 15, etc., each of the bus bars 155 includes a first connector 161 and a second connector 162. In the bus bar 155 connecting the batteries 101α and 101β adjacent to each other, the first connector 161 is provided with a first contact part 163 which contacts the first target terminal (corresponding one of 127α) of the battery (first battery) 101α. The second connector 162 is provided with a second contact part 165 which contacts the second target terminal (corresponding one of 127β) of the battery (second battery) 101β. The first contact part 163 comes into contact with the first target terminal (corresponding one of 127α) from a side opposite to a side where the bottom wall 107 is located in the second intersecting direction (height direction of the battery 101α), and is connected to the first target terminal (corresponding one of 127α) by welding, etc. In addition, the second contact part 165 contacts the second target terminal (corresponding one of 127β) from the side opposite to the side where the bottom wall 107 is located in the second intersecting direction (height direction of the battery 101β), and is connected to the second target terminal (corresponding one of 127β) by welding, etc.

In the present embodiment, the first contact part 163 of the first connector 161 that contacts the first target terminal (corresponding one of 127α) is formed in a linear shape along the first intersecting direction (the lateral direction of the battery 101α). The second contact part 165 of the second connector 162 that contacts the second target terminal (corresponding one of 127β) is formed in a linear shape along the first intersecting direction (the lateral direction of the battery 101β).

In the bus bar 155 connecting the batteries 101α and 101β, the first connector 161 is provided with an extension part (first bar extension part) 181, and the second connector 162 is provided with an extension part (second bar extension part) 182. The extension part 181 extends from the first contact part 163 to a side opposite to a side where the battery (second battery) 101β is located in the stacking direction. The extension part 182 extends from the second contact part 165 to a side where the battery (first battery) 101α is located in the stacking direction.

Each of the bus bars 155 includes a bar relay part 166 which relays between the first connector 161 (first contact part 163) and the second connector 162 (second contact part 165). In the present embodiment, the bar relay part 166 relays between the extension parts 181 and 182. The extension part 181 is continuous with the bar relay part 166 at an end on a side where the first contact part 163 is located. The extension part 182 is continuous with the bar relay part 166 at an end on a side opposite to a side where the second contact part 165 is located.

The extension part (first bar extension part) 181 extends so as to be located on the outer side in a direction intersecting the stacking direction as it away from the battery (second battery) 101β in the stacking direction. That is, the extension part 81 extends so as to be located on the outer side in the second intersecting direction as it extends away from the bar relay part 166 in the stacking direction. The extension part (second bar extension part) 182 extends so as to be located on the outer side in the direction intersecting the stacking direction as it approaches toward the battery (first battery) 101α in the stacking direction. That is, the extension part 182 extends so as to be located on the outer side in the second intersecting direction as it extends toward the bar relay part 166 in the stacking direction. Further, the bar relay part 166 extends so as to be located on the outer side in the direction intersecting the stacking direction as it approaches toward the second connector 162 in the stacking direction. That is, the bar relay part 166 extends so as to be located on the outer side in the second intersecting direction as it extends toward the extension part 182.

Next, manufacturing of the battery module 150 will be described. When the battery module 150 is assembled, a plurality of batteries 101 are stacked to form a stacked body of the batteries 101. Each of the bus bars 155 electrically connects two corresponding batteries 101 adjacent to each other in the stacking direction. The batteries 101α and 101β adjacent to each other are electrically connected by one of the bus bars 155. At this time, first, the first connector 161 of the bus bar 155 is brought into contact with the first target terminal (corresponding one of 127α) of the battery (first battery) 101α at the first contact part 163. After that, the second connector 162 of the bus bar 155 is brought into contact with the second target terminal (corresponding one of 127β) of the battery (second battery) 101β at the second contact part 165. Then, the first contact part 163 is welded to the first target terminal (corresponding one of 127α), and the second contact part 165 is welded to the second target terminal (corresponding one of 127β). Thus, the first target terminal (corresponding one of 127α) of the battery 101α and the second target terminal (corresponding one of 127β) of the battery 101β are electrically connected by the bus bar 155.

Here, in the battery module 150, dimensions, etc. may vary among the batteries 101. In this case, in the batteries 101α and 101β, positions of the two target terminals (the first target terminal and the second target terminal) connected by the bus bar 155 may be shifted from each other in a direction intersecting the stacking direction. That is, there is a possibility that the first target terminal (corresponding one of 127α) and the second target terminal (corresponding one of 127β) may be shifted from each other in the second intersecting direction, for example.

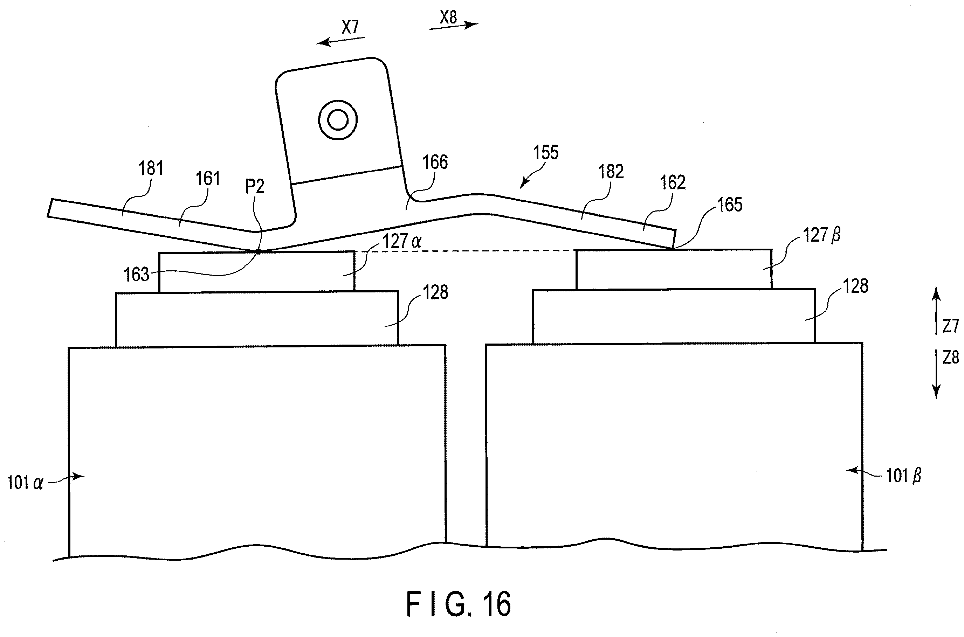

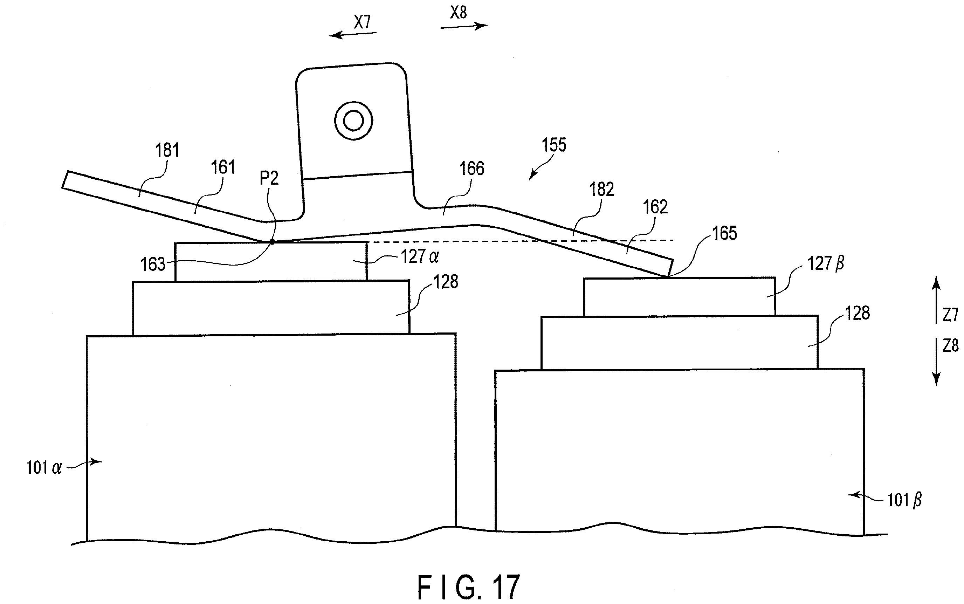

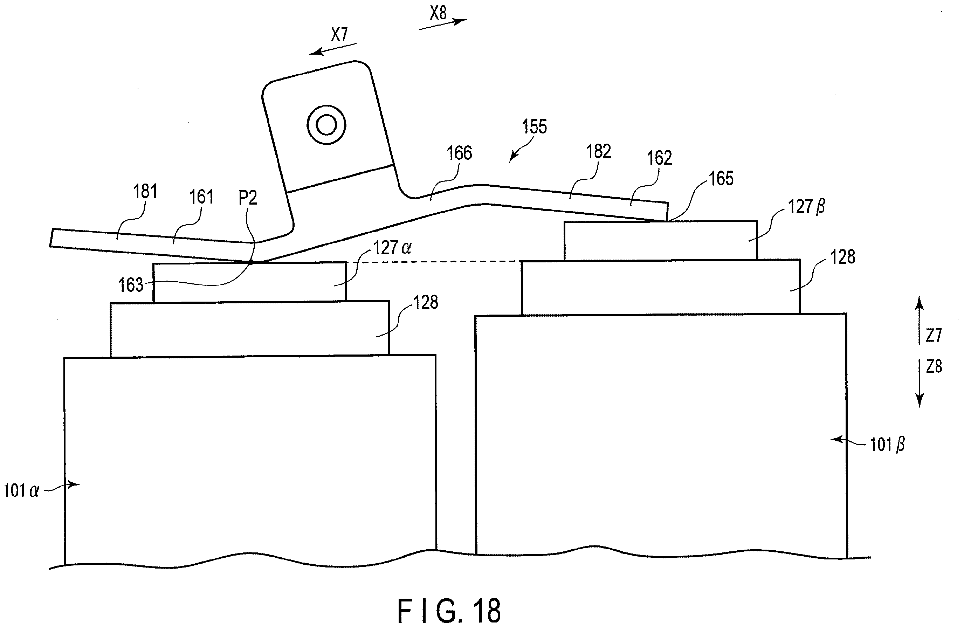

In the battery module 150 of the example of FIG. 16, the second target terminal (corresponding one of 127β) of the battery 101β is not shifted from the first target terminal (corresponding one of 127α) of the battery 101α in the second intersecting direction. In the battery module 150 of the example of FIG. 17, the second target terminal (corresponding one of 127β) of the battery 101β is shifted from the first target terminal (corresponding one of 127α) of the battery 101α to the inner side (the arrow Z8 side) in the second intersecting direction. In the battery module 150 of the example of FIG. 18, the second target terminal (corresponding one of 127β) of the battery 101β is shifted from the first target terminal (corresponding one of 127α) of the battery 101α to the outer side (the arrow Z7 side) in the second intersecting direction.

In the present embodiment, before the bus bar 155 is welded to the first target terminal (corresponding one of 127α) and the second target terminal (corresponding one of 127β), the first contact part 163 is brought into contact with the first target terminal (corresponding one of 127α) so that the bus bar 155 is swingable (rotatable) about a swinging axis (rotational axis) P2 relative to the batteries 101α and 101β. The swinging axis P2 extends along the first contact part 163 and extends along the first intersecting direction (the lateral direction of the battery 101α). When the bus bar 155 swings about the swinging axis P2, the second contact part 165 of the second connector 162 can be easily brought into contact with the second target terminal (corresponding one of 127β) in a state where the first contact part 163 of the first connector 161 is in contact with the first target terminal (corresponding one of 127α). This makes it easy to form a state in which the first connector 161 (first contact part 163) contacts the first target terminal (corresponding one of 127α) and the second connector 162 (second contact part 165) contacts the second target terminal (corresponding one of 127β).

Since a state in which the first connector 161 is in contact with the first target terminal (corresponding one of 127α) and the second connector 162 is in contact with the second target terminal (corresponding one of 127β) is easily formed, the first connector 161 is easily welded to the first target terminal (corresponding one of 127α) and the second connector 162 is easily welded to the first target terminal (corresponding one of 127β). Therefore, in the present embodiment as well, even if the positions of the two target terminals connected by the bus bar 155 are shifted from each other in the direction (e.g., the second intersecting direction) intersecting the stacking direction, the work efficiency of the work of connecting the two target terminals by the bus bar 155 is ensured. That is, regardless of relative positions of the two target terminals connected by the bus bar 155, the work efficiency of the work of connecting the two target terminals by the bus bar 155 is ensured.

In addition, since the first connector 161 is easily welded to the first target terminal (corresponding one of 127α), the bus bar 155 is appropriately connected to the first target terminal (corresponding one of 127α). Since the second connector 162 is easily welded to the second target terminal (corresponding one of 127β), the bus bar 155 is appropriately connected to the second target terminal (corresponding one of 127β). By appropriately connecting the bus bar 155 to the two target terminals, the reliability of the battery module 150 is ensured. That is, the bus bar 155 is appropriately connected to the two target terminals regardless of the relative positions of the two target terminals connected by the bus bar 155, and the reliability of the battery module 150 is ensured.

### (Other Modifications)

In a modification, in a configuration in which a plurality of batteries 101 are stacked as in the second embodiment, a partition plate, etc. is arranged between the batteries 101α and 101β adjacent to each other to form a partition wall between the batteries 101α and 101β. In this case, the batteries 101α and 101β may be electrically connected by a bus bar 55 similar to that of the first embodiment, etc. In this case, the bus bar (e.g., 55) is coupled to the partition wall between a first contact part (e.g., 63) and a second contact part (e.g., 65).

In a modification, in a configuration in which a plurality of batteries 101 are stacked as in the first embodiment, batteries 101α and 101β adjacent to each other may be electrically connected to each other by a bus bar 155 similar to that in the second embodiment, etc. In this case, a partition wall may be provided between the batteries 101α and 101β, but the bus bar (e.g., 155) is not coupled to the partition wall.

In the above-described embodiments, etc., one electrode group is accommodated in the inner cavity of the container 3 or the exterior container 103, but it is not limited thereto. In a modification, a plurality of electrode groups may be accommodated in the inner cavity of the container 3 or the exterior container 103.

In the above-described embodiments, etc., each of the electrode terminals 27 is formed of one member attached to the outer surface of the container 3, etc., but it is not limited thereto. In a modification, a pair of electrode terminals 27 are provided in the battery 1 of the first embodiment, etc., and each of the electrode terminals 27 includes a plurality of members exposed to the outside the container 3. In this case, each of the electrode terminals 27 includes, for example, a first terminal member attached to the outer surface of the container 3 and a bar-shaped second terminal member connected to the first terminal member. In each of the electrode terminals 27, the second terminal member extends from the first terminal member toward the outer peripheral side.

In the battery module 50, etc., each of the first target terminal of the battery 1α and the second target terminal of the battery 1β may include the above-described first terminal member and second terminal member. In this case, in each of the first target terminal of the battery 1α and the second target terminal of the battery 1β, the second terminal member extends to the outer side from the first terminal member in the direction intersecting the stacking direction. In the bus bar 55 connecting the batteries 1α and 1β, the first contact part 63 contacts the second terminal member of the first target terminal, and the second contact part 65 contacts the second terminal member of the second target terminal.

According to at least one of these embodiments or examples, a bus bar is coupled to a partition wall between a first contact part and a second contact part. As a result, it is possible to provide a battery module in which the work efficiency of a work of connecting two target terminals by the bus bar is ensured and the reliability is ensured.

According to at least one of these embodiments or examples, a first bar extension part of the bus bar extends so as to be located on an outer side in a direction intersecting the stacking direction as it extends away from a second battery in the stacking direction. A second bar extension part of the bus bar extends so as to be located on an outer side in the direction intersecting the stacking direction as it extends toward a first battery in the stacking direction. Thereby, it is possible to provide a battery module in which the work efficiency of a work of connecting two target terminals by the bus bar is ensured and the reliability is ensured.

## Claims

1. A battery module comprising:
a first battery including a pair of first electrode terminals;
a second battery including a pair of second electrode terminals and being arranged adjacent to the first battery in a stacking direction;
a partition wall that partitions between the first battery and the second battery in the stacking direction; and
a bus bar including a first contact part and a second contact part, the first contact part being in contact with a first target terminal which is a corresponding one of the pair of first electrode terminals, the second contact part being in contact with a second target terminal which is a corresponding one of the pair of second electrode terminals, the bus bar electrically connecting the first target terminal and the second target terminal to each other and being coupled to the partition wall between the first contact part and the second contact part.

2. The battery module according to claim 1, wherein the partition wall protrudes to an outer side with respect to the first target terminal and the second target terminal in a direction intersecting the stacking direction, and
the bus bar is coupled to a protruding portion of the partition wall with respect to the first target terminal and the second target terminal.

3. The battery module according to claim 1 or 2, further comprising an engagement member that is engaged with the partition wall,
wherein the bus bar is coupled to the partition wall via the engagement member.

4. The battery module according to any one of claims 1 to 3, wherein
the bus bar includes a first bar extension part extending from the first contact part to a side opposite to a side where the second battery is located in the stacking direction, and a second bar extension part extending from the second contact part to a side where the first battery is located in the stacking direction,
the first bar extension part extends so as to be located on an outer side in the direction intersecting the stacking direction as the first bar extension part extends away from the second battery in the stacking direction, and
the second bar extension part extends so as to be located on an outer side in the direction intersecting the stacking direction as the second bar extension part extends toward the first battery in the stacking direction.

5. The battery module according to claim 4, wherein
the bus bar includes a bar relay part that relays between the first bar extension part and the second bar extension part beyond the partition wall, and
the bus bar is coupled to the partition wall at the bar relay part.

6. The battery module according to any one of claims 1 to 5, wherein
each of the first battery and the second battery includes an electrode group including a positive electrode and a negative electrode, and a container made of a metal and defining an inner cavity in which the electrode group is accommodated,
in the first battery, the pair of first electrode terminals are attached to an outer surface of the container,
in the second battery, the pair of second electrode terminals are attached to an outer surface of the container,
in each of the container and the inner cavity of each of the first battery and the second battery, a dimension in a height direction is smaller than each of a dimension in a lateral direction intersecting the height direction and a dimension in a depth direction intersecting both the height direction and the lateral direction, and
each of the first battery and the second battery is arranged in a state in which the height direction is along the stacking direction.

7. The battery module according to claim 6, wherein
in the first battery, the electrode group is arranged between the pair of first terminals in the lateral direction,
in the second battery, the electrode group is arranged between the pair of second terminals in the lateral direction,
each of the first battery and the second battery is arranged in a state in which the lateral direction is along a first intersecting direction intersecting the stacking direction and the depth direction is along a second intersecting direction intersecting both the stacking direction and the first intersecting direction, and
the first target terminal, the second target terminal, and the bus bar are arranged on a same side with respect to the electrode group of each of the first battery and the second battery in the first intersecting direction.

8. The battery module according to claim 6 or 7, wherein
the container of each of the first battery and the second battery includes a first container member including a bottom wall, a peripheral wall surrounding an outer peripheral side of the inner cavity, and a flange protruding to the outer peripheral side from an end portion of the peripheral wall on a side opposite to the bottom wall, and a second container member attached to the flange from a side opposite to the bottom wall in the height direction, and
the bottom wall of the first battery faces the second container member of the second battery with the partition wall interposed therebetween.

9. The battery module according to claim 8, further comprising:
a first cover member attached to the first battery; and
a second cover member attached to the second battery,
wherein
each of the first cover member and the second cover member includes a base and a side plate part,
the base of the first cover member abuts on the bottom wall of the first battery and forms the partition wall between the first battery and the second battery,
the side plate part of the first cover member extends from the base of the first cover member toward a side where the flange of the first battery is located, and faces the peripheral wall of the first battery from the outer peripheral side in a range away from the pair of first electrode terminals in a circumferential direction of the first battery,
the base of the second cover member abuts on the bottom wall of the second battery, and
the side plate part of the second cover member extends from the base of the second cover member toward a side where the flange of the second battery is located, and faces the peripheral wall of the second battery from the outer peripheral side in a range away from the pair of second electrode terminals in a circumferential direction of the second battery.

10. The battery module according to claim 9, wherein
in each of the first cover member and the second cover member, the side plate part includes a first cover extension part continuous with the base, and a second cover extension part arranged on a side opposite to a side where the base is located with respect to the first cover extension part,
in the first cover member, the second cover extension part is located on the outer peripheral side with respect to the first cover extension part and protrudes from the second container member of the first battery to a side opposite to a side where the bottom wall of the first battery is located,
in the second cover member, the second cover extension part is located on the outer peripheral side with respect to the first cover extension part and protrudes from the second container member of the second battery to a side opposite to a side where the bottom wall of the second battery is located, and
the second cover extension part of the second cover member abuts on the first cover extension part of the first cover member from the outer peripheral side.

11. A battery module comprising:
a first battery including a pair of first electrode terminals;
a second battery including a pair of second electrode terminals and being arranged adjacent to the first battery in a stacking direction; and
a bus bar including a first contact part and a second contact part, the first contact part being in contact with a first target terminal which is a corresponding one of the pair of first electrode terminals, the second contact part being in contact with a second target terminal which is a corresponding one of the pair of second electrode terminals, the bus bar electrically connecting the first target terminal and the second target terminal,
wherein
the bus bar includes a first bar extension part extending from the first contact part to a side opposite to a side where the second battery is located in the stacking direction, and a second bar extension part extending from the second contact part to a side where the first battery is located in the stacking direction,
the first bar extension part extends so as to be located on an outer side in a direction intersecting the stacking direction as the first bar extension part extends away from the second battery in the stacking direction, and
the second bar extension part extends so as to be located on an outer side in the direction intersecting the stacking direction as the second bar extension part extends toward the first battery in the stacking direction.
